# EUROPEAN PATENT SPECIFICATION

(11) **EP 3 351 827 B1**
(45) Date of publication and mention of the grant of the patent: **03.08.2022**
(21) Application number: 17152506.6
(22) Date of filing: 20.01.2017
(51) Int. Cl.: F16H 39/20, B61C 9/16, B61H 11/06, B60K 6/12, F15B 1/02, F16H 61/44, F16H 61/4096

(54) **HYDROSTATIC TRANSMISSION FOR A VEHICLE**
HYDROSTATISCHES GETRIEBE FÜR EIN FAHRZEUG
TRANSMISSION HYDROSTATIQUE D'UN VÉHICULE

(43) Date of publication of application: 25.07.2018
(73) Proprietor: Artemis Intelligent Power Limited, Loanhead, Midlothian EH20 9TB (GB)
(72) Inventor: VOLLER, Gordon Paul, Loanhead, Midlothian EH20 9TB (GB); DODSON, Henry, Loanhead, Midlothian EH20 9TB (GB); LAIRD, Stephen Michael, Loanhead, Midlothian EH20 9TB (GB)
(74) Representative: Hindles Limited

(56) References cited:
- EP-A1- 2 851 585
- WO-A1-2016/069485
- WO-A2-2008/012558
- WO-A2-2011/104546
- US-A- 2 875 871
- US-A1- 2007 186 548
- US-A1- 2009 317 266
- US-B2- 8 585 156

## Description

### Field of the invention

The invention relates to the field of hydraulic transmissions and other hydraulic apparatuses including variable displacement hydraulic pumps or motors including but not limited to those having electronically controlled valves which are controlled to determine whether each working chamber carries out an active cycle or an inactive cycle on each cycle of working chamber volume.

### Background to the invention

It is known to use a hydraulic transmission, with a variable displacement hydraulic pump and a variable displacement hydraulic motor, in apparatus such as wind turbine generators and vehicles. For example, in the case of a wind turbine generator, a variable displacement hydraulic pump may be driven by a drive shaft connected to a rotor which is driven by the wind, and one or more variable displacement hydraulic motors may be connected to one or more electrical generators, and driven by pressurised hydraulic fluid from the output of the hydraulic pump. In the case of a vehicle, a prime mover (e.g. an internal combustion engine or electric motor), possibly with intermediate torque-conversion device, may drive a hydraulic pump, and a hydraulic motor (driven by hydraulic fluid pressurised by the pump) may provide motive power to the drive wheels, or may drive another actuator.

A hydraulic system typically comprises fluid load(s) (hydraulic consumers, e.g. hydraulic motors) and fluid source(s) (e.g. hydraulic pumps), with fluid conduits in the form of pipes, galleries and hoses. They may also include accumulators which can serve several purposes, for example, smoothing, reducing pressure peaks and/or dynamic pressure ripple, or as short term stores of fluid energy.

WO2006055978 (Dana/Bosch), discusses infinitely variable transmissions (IVT).

US7793496 (Rampen) describes a hydrostatic transmission.

US20080083576 (READ, DAVID H) describes a hydraulic hybrid locomotive.

IMechE 1981 C155/81, 'A hydrostatic transmission for a railway passenger vehicle', JD Tunley, MSc and KS Preston, BSc, British Rail Research, Derby, ISBN 0 85298 476 6, discloses a hydrostatic rail vehicle transmission.

Document WO 2008/012558 A2 discloses a hydrostatic regenerative drive system.

US 2009/0317266A1 relates to a hydraulic pump for use in driving a load with a control modulation system which modulates a primary control signal in order to accommodate variations in secondary changeable parameters which require control at a higher frequency or have a lower latency.

### Summary of the invention

A first aspect of the invention provides a series hydrostatic transmission for a (typically rail) vehicle. The (typically rail) vehicle typically comprises a plurality of wheels. The transmission comprises a first hydraulic pump and a hydraulic motor each of which has a pumping mode in which it operates as a hydraulic pump and a motoring mode in which it operates as a hydraulic motor. That is, the first hydraulic pump has a pumping mode in which it operates as a hydraulic pump and a motoring mode in which it operates as a hydraulic motor and the hydraulic motor has a pumping mode in which it operates as a hydraulic pump and a motoring mode in which it operates as a hydraulic motor. The said pump and the said motor each comprise a plurality of cylinders (working chambers) of cyclically varying working volume in which the displacement of hydraulic fluid through each cylinder is regulated by one or more electronically controllable valves, on each cycle of cylinder working volume, and in phased relationship to cycles of cylinder working volume with reference to a phase signal provided by a phase sensor. The pump is torque connected or torque connectable to at least one prime mover (e.g. an engine). The motor is torque connected or torque connectable to one or more of the wheels, typically by way of a torque transmitting device (e.g. which may comprise a gearbox). The transmission has a first mode in which the pump and motor are fluidly connected to each other such that fluid pressurised by the pump (typically directly) drives the motor. The transmission has a second mode in which energy from hydraulic fluid pressurised by the motor in the pumping mode is transferred to an energy store. The transmission has a third mode in which energy from the energy store drives the motor. The motor comprises a valve assembly disposed between (and typically configured to control whether there is hydraulic fluid communication between) a high pressure line (e.g. through which a working chamber of the said motor receives or outputs pressurised hydraulic fluid) and a (e.g. said) working chamber of the motor. The valve assembly comprises: a main valve having a main valve element providing sealing contact with a valve seat. The valve assembly further comprises a pilot valve for equalising pressure across the main valve element by placing the working chamber in direct fluid communication with the high pressure line.

By using electronically commutated hydraulic machines ('EC' machines) to form a hydrostatic transmission, linking the prime mover (e.g. engine output) to the wheels, this transmission has high efficiency, and thus reduces energy losses which might otherwise occur between the prime mover (e.g. engine) and the wheels. In addition, a variable gear ratio is typically provided which allows the prime mover (e.g. engine) to always operate at speeds that correspond to optimal points on its fuel map (also known as 'ignition map') thus maximising its fuel efficiency. A further advantage of integration of the electronically commutated machines into a rail vehicle is that they are inherently reversible, eliminating the need for separate reversing gear.

In addition to improved efficiency, the system will typically allow braking energy to be captured. Captured energy may be stored in (e.g. gas) accumulators (which are typically provided on-board the (typically rail) vehicle), or in a flywheel, or other energy store which can accept pressurised hydraulic fluid, and can be reused to accelerate the vehicle. These accumulators are typically of the oleo-pneumatic type. Since the captured energy can be used to supplement the power available from the engine, higher acceleration is possible, thus reducing journey times.

In cases where the prime mover comprises an engine, when departing from stations, the engine rpm will be low compared with existing hydrodynamic transmissions, resulting in less noise and lower emissions.

The transmission is typically suitable for retrofitting to existing (e.g. diesel, e.g. rail) vehicles.

In summary, as compared to traditional (typically rail) vehicles comprising mechanical transmissions, fuel savings are achieved by:
- Operating prime mover (e.g. engine) at optimum BSFC (brake specific fuel consumption)
- Energy storage (e.g. in hydraulic accumulators or flywheel energy storage system)
- Higher transmission efficiency

During acceleration, the accumulator (e.g. gas or oleo-pneumatic type) can be used in conjunction with the prime mover (e.g. internal combustion engine) to provide very high power levels at the wheels. Further benefits include:
- With retrofit, enables replacement of old high emissions (typically rail) engines
- Wider variety of appropriate engines to consider
- Reduced un-sprung mass

It may be that the said motor comprises a plurality of said valve assemblies, each being configured to control whether there is hydraulic fluid communication between a respective cylinder of the motor and the high pressure line. It may be that each said valve assembly comprises a main valve having a main valve element providing sealing contact with a valve seat and a pilot valve for equalising pressure across the main valve element by placing the working chamber in direct fluid communication with the high pressure line.

It may be that, for the said valve assembly or for each said valve assembly, the main valve element provides sealing contact with the said valve seat in a closed position of the main valve element. It may be that the main valve element is moveable from the closed position to an open position in which it is spaced from the said valve seat. Typically the pressure equalisation achieved by way of the pilot valve allows the main valve element to move from its closed position to its open position (or vice versa). It may be that the pilot valve comprises a pilot valve element which has a closed position in which it provides sealing contact with a pilot valve seat and an open position in which it is spaced from the pilot valve seat. It may be that the pilot valve element has a lower cross sectional area than the main valve element which allows the pilot valve element to open or close against a greater pressure differential than the main valve element.

It may be that the energy store comprises a hydraulic accumulator. It may be that, in the said second mode, energy is transferred by way of hydraulic fluid pressurised by the motor operating in the pumping mode. It may be that, in the said third mode, the energy driving motoring of the motor is provided by pressurised hydraulic fluid released from the accumulator.

It may be that the energy store comprises a rotatable flywheel. It may be that in the said second mode energy is transferred by way of kinetic energy supplied to the flywheel by a flywheel hydraulic pump-motor having a pumping mode in which it operates as a pump and a motoring mode in which it operates as a motor, the said flywheel hydraulic pump-motor operating in the motoring mode and being driven by hydraulic fluid pressurised by said motor operating in the pumping mode. It may be that the energy driving motoring of the said motor in the said third mode is provided by fluid pressurised by the flywheel hydraulic pump-motor operating in the pumping mode, the flywheel hydraulic pump-motor being driven by rotation of the flywheel.

It may be that the vehicle comprises a carriage having a bogie comprising the said wheels and at least one raft secured to the carriage. It may be that the said prime mover is fixedly mounted to the said raft. It may be that the motor is mounted or mountable to the bogie, or on a shaft secured to the carriage. It may be that the torque transmitting device is a geared device, comprising at least two gears.

It may be that the first pump is fixedly connected or fixedly connectable to the prime-mover by way of a bell housing and flexible coupling. It may be that a torque between the bell housing and the first pump is internally resolved within the bell housing and the pump housing. This means that drive torque between the pump and the bell housing is not transmitted to the pump mounts.

It may be that the transmission further comprises a second prime mover. It may be that the second prime mover is torque connected or torque connectable to a second hydraulic pump having a pumping mode in which it operates as a hydraulic pump and a motoring mode in which it operates as a hydraulic motor. It may be that, in the said first mode, fluid pressurised by the first pump is combined with fluid pressurised by the second pump to drive the said motor.

It may be that the phase sensor of at least one of the said first pump and the motor is an absolute encoder.

It may be that the vehicle comprises a carriage having a bogie comprising the said wheels and at least one raft secured to the carriage. It may be that there is a primary suspension located to suspend the bogie from the axle and thus the wheels. It may be that there is a quill shaft which transmits torque from the torque transmission device to the axle. It may be that a flexible element couples the axle to the torque transmitting device thus allowing the axle to travel the full length of the primary suspension without the axle impacting the inner diameter of the quill shaft.

It may be that the accumulator is an oleo-pneumatic accumulator having a first chamber comprising received hydraulic fluid and a second chamber comprising pressurised gas, the first and second chambers being separated by a piston. It may be that the second chamber of the accumulator is configured to receive pressurised gas from one or more backup gas bottles to allow the piston to sweep the full length of the accumulator.

It may be that the transmission comprises a fourth mode in which the first pump and said motor are fluidly connected to each other such that fluid pressurised by the first pump (typically directly) drives the said motor and in which energy from the energy store (also) drives the said motor (typically simultaneously). It may be that the said energy from the energy store is provided by way of pressurised hydraulic fluid which is combined with the said pressurised hydraulic fluid provided by the first pump.

It may be that the transmission comprises a fifth mode in which energy from the energy store drives the first pump, pressurised fluid from the said energy store driving motoring of the first pump. It may be that the pressurised fluid from the said energy store thus drives a or the torque connected prime mover (i.e. by way of driving motoring of the pump torque connected thereto).

It may be that the transmission comprises a sixth mode in which fluid pressurised by the first pump (typically driven by the said one or more prime movers) is transferred to the energy store.

It may be that the transmission comprises a seventh mode in which fluid pressurised by said motor operating in the pumping mode (typically directly) drives motoring of said first pump. It may be that fluid pressurised by said motor in the pumping mode thus also drives a or the torque connected prime mover (i.e. by way of driving motoring of the pump connected thereto).

It may be that the transmission comprises one or more (typically electronically) switchable hydraulic valves switchable between open and closed positions by a controller. It may be that the controller is configured to switch one or more of the said switchable valves between open and closed positions to thereby inhibit locking of one or more said wheels of the vehicle during braking event and/or to inhibit excess rotation of one or more said wheels of the vehicle during an acceleration event.

It will be understood that the transmission according to the first aspect of the invention may be provided with any one or more of the said numbered modes independently of the other numbered modes. For example, the transmission may be provided with the sixth mode but not with the fourth mode.

It may be that one or more accessories and/or ancillaries and/or auxiliaries are driven by a hydraulic motor which is provided with pressurised fluid from the transmission.

It may be that the said plurality of wheels of the vehicle comprises a first pair of wheels mechanically coupled together by a first axle. It may be that the said plurality of wheels of the vehicle comprises a second pair of wheels mechanically coupled together by a second axle. It may be that the said (hydraulic) motor is a first (hydraulic) motor and is torque connected or torque connectable to the said first plurality of wheels by way of the first axle (such that motoring of the said first motor causes or would cause a torque to be applied to the said first plurality of wheels by way of the first axle). It may be that the transmission further comprises a second hydraulic motor having a pumping mode in which it operates as a hydraulic pump and a motoring mode in which it operates as a hydraulic motor, the said second motor being torque connected or torque connectable to the second plurality of wheels by way of the second axle (such that motoring of the said second motor causes or would cause a torque to be applied to the said second plurality of wheels by way of the second axle). It may be that, in the said first mode of the transmission, the said first pump operating in the pumping mode, or a further hydraulic pump, is fluidly connected to the second motor such that fluid pressurised by the first pump or by the said further pump (typically directly) drives (motoring of) the said second motor (such that the second motor thereby applies a torque to the second plurality of wheels by way of the second axle). Typically the torques applied by the said first motor to the first axle and by the second motor to the second axle are independently variable.

The transmission may comprise a transmission controller configured to control the (e.g. select and cause the transmission to operate in accordance with the selected) mode of operation of the transmission (i.e. to control the said mode in which the transmission operates). Typically the transmission controller is in (typically electronic) communication with a prime mover controller which controls operation of the prime mover. The transmission controller typically comprises one or more computer processors and one or more memories, the one or more computer processors being configured to execute computer program instructions stored on the said one or more memories to thereby control the mode of the transmission. Additionally or alternatively, the transmission controller may comprise one or more (e.g. dedicated) integrated circuits configured to control the mode of operation of the transmission.

Typically one or more controllers are provided to control the operating modes of the said motor(s), pump(s) and (where provided) pump-motor(s). Typically the said one or more controllers are configured (or together configured) to control whether each of the said pump(s), motor(s) and (where provided) pump-motor(s) operate in their respective pumping mode or in their respective motoring mode.

A second aspect of the invention provides a (typically rail) vehicle comprising a plurality of wheels and a transmission according to the first aspect of the invention. It may be that the vehicle further comprises a prime mover (e.g. engine). It may be that the said transmission is connected in series between the said prime mover and the said wheels.

It may be that the transmission is retrofitted to the said vehicle.

The (typically rail) vehicle may comprise any of the features of the (typically rail) vehicle described in respect of the first aspect of the invention.

A third aspect of the invention provides a method of operating the transmission according to the first aspect of the invention. The method comprises providing propulsion to the vehicle by operating the transmission in the said third mode. The method comprises, responsive to a determination that an energy supply in the energy store is or will be exhausted, operating the transmission in the said first mode. The method typically comprises applying positive torque to the wheels of the vehicle by operating the transmission in the said first mode. Applying positive torque to the wheels of the vehicle typically causes motion of the vehicle, typically in a forwards direction.

It may be that positive torque is applied to the wheels of the vehicle solely by way of hydraulic fluid pressurised by the said first pump, or by the combination of the said first pump and the one or more other hydraulic pumps driven by one or more respective prime movers.

It may be that the method comprises propelling the vehicle by operating the transmission in the said first mode, subsequently operating the transmission in the said fourth mode and subsequently operating the transmission in the said third mode. It may be that, when the transmission is in the third mode, the said first pump does not drive motoring of the motor.

It may be that the method comprises operating the transmission in the said fifth mode.

It may be that the method comprises operating the transmission in the said sixth mode.

It may be that the method comprises operating the transmission in the said seventh mode.

It may be that the method comprises providing propulsion to the vehicle by operating the transmission in the said third mode, with the respective prime mover(s) shut off, until one or more predefined criteria are met, and responsive to a determination that the criteria are met powering the prime mover.

In respect of the above paragraph, embodiments of the predefined criteria include a physical location such that the criteria are met once physical location is sensed, or energy flow or power to or from one part of the hydraulic circuit (e.g. the rate of flow of fluid from an accumulator acting as an energy store, falling below a threshold). Another criteria might be once a threshold vehicle speed is reached or anticipated to be reached. Or, some combination of the above criteria.

It may be that the method comprises propelling the vehicle by operating the transmission in the first mode and then subsequently in the fourth mode.

It may be that the method comprises switching one or more switchable valves between open and closed positions to thereby inhibit locking of one or more said wheels of the vehicle during a braking event and/or to inhibit excess rotation of one or more said wheels of the vehicle during a propulsion phase.

It may be that the said motor is operable to drive the said wheels clockwise in a first motoring mode and anticlockwise in a second motoring mode.

It may be that the said plurality of wheels of the vehicle comprises a first pair of wheels mechanically coupled together by a first axle and a second pair of wheels mechanically coupled together by a second axle, wherein the said motor (or the said first motor) is torque connected to the said first pair of wheels by way of the first axle, the method further comprising controlling the said motor (or the said first motor) to vary the speed of or torque applied to one or more of the said first pair of wheels in dependence on a slip condition of one or more of the said second pair of wheels.

It may be that the said first motor is operable to drive the said first pair of wheels clockwise in a first motoring mode and anticlockwise in a second motoring mode.

It may be that a or the said second motor is operable to drive the said second pair of wheels clockwise in a first motoring mode and anticlockwise in a second motoring mode.

Although various aspects and embodiments of the present invention have been described separately above, any of the aspects and features of the present invention can be used in conjunction with any other aspect, embodiment or feature where appropriate. For example apparatus features may where appropriate be interchanged with method features.

### Description of the Drawings

An example embodiment of the present invention will now be illustrated with reference to the following Figures in which:
Figure 1 illustrates a hydraulic motor in the form of an EC hydraulic pump/motor;
Figure 2 is a schematic diagram of the machine controller of the motor of Figure 1;
Figure 3 illustrates a process whereby the controller receives inputs and determines pump and motor displacement;
Figure 4 illustrates the procedure carried out by the hydraulic motor of Figure 1 to determine the net displacement by each cylinder sequentially, in a default operating procedure;
Figure 5 is a hydraulic schematic for two hydraulic motor bogies;
Figure 6 provides a series of graphs illustrating characteristics of the electronically commutated motor;
Figure 7 shows 3 graphs of a baseline Diesel Multiple Unit (DMU) simulation;
Figure 8 is a side view of a rail vehicle, showing inside single-stage speed-increasing gearboxes;
Figure 9 shows a powered bogie arrangement with two independent EC pump-motors;
Figure 10 is a sectional end-view of the same powered bogie of Figure 9;
Figure 11 is an isometric version of Figures 9 & 10;
Figure 12 shows the vehicle underside layout;
Figure 13 shows a pair of EC motors connected to the powertrain directly and via clutch.
Figure 14 shows a hydraulic pump mounted to an engine via a bell housing, in outline section.
Figure 15 (A) shows a part cross-section through a valve assembly with pilot valve stage, while the primary poppet valve head is closed and before current is passed through the electromagnet;
Figure 16 part B shows a part cross-section through the valve assembly of Figure 15(A) after the armature has moved from the first position, towards the second position responsive to the magnetic field generated by current being passed through the electromagnet;

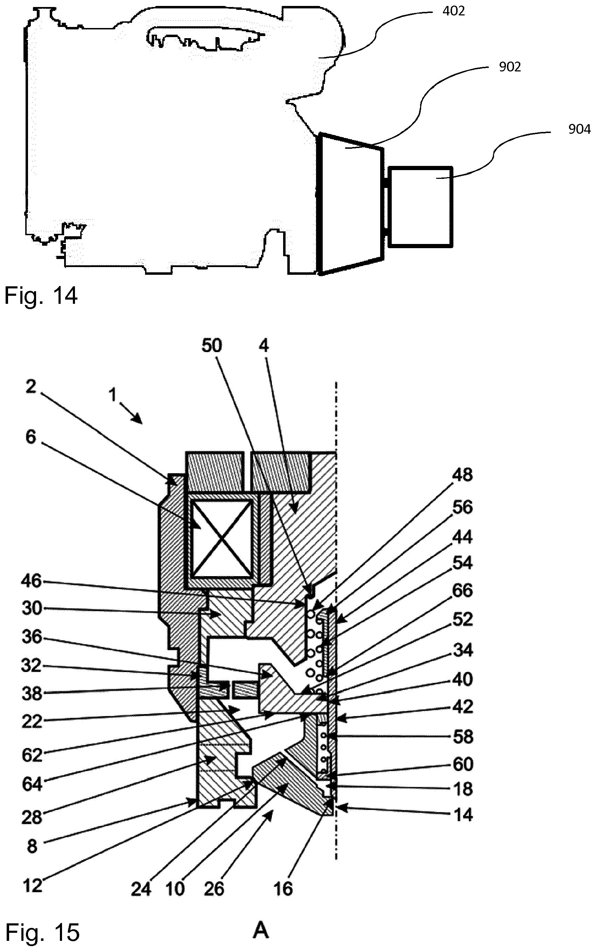

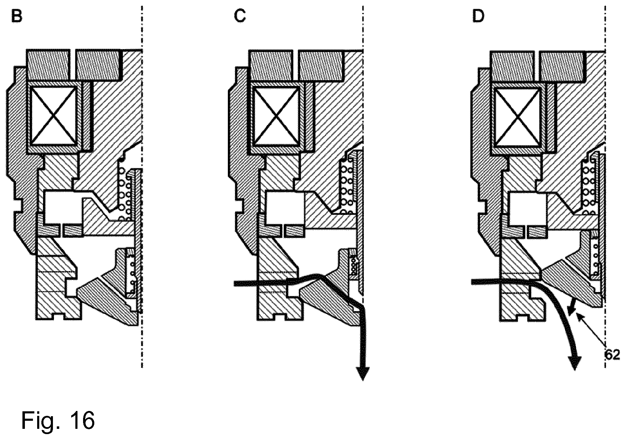

Figure 16 part C shows a part cross-section through the valve assembly of Figure 15(A) after the secondary valve member (in the form of rigid stem 42) has moved from its valve seat to open the secondary valve;
Figure 16 part D shows a part cross-section through the valve assembly of Figure 15(A) after the primary valve member (in the form of rigid stem 42) has moved from the primary valve seat to open the primary valve and the armature has reached the second position.

### Detailed Description of an Example Embodiment

In accordance with the invention, EC hydraulic machines are used to form a hydrostatic transmission, linking an engine output of a rail vehicle to two or more wheels of the said vehicle, and an energy store system, in order to provide propulsion and regenerative braking.

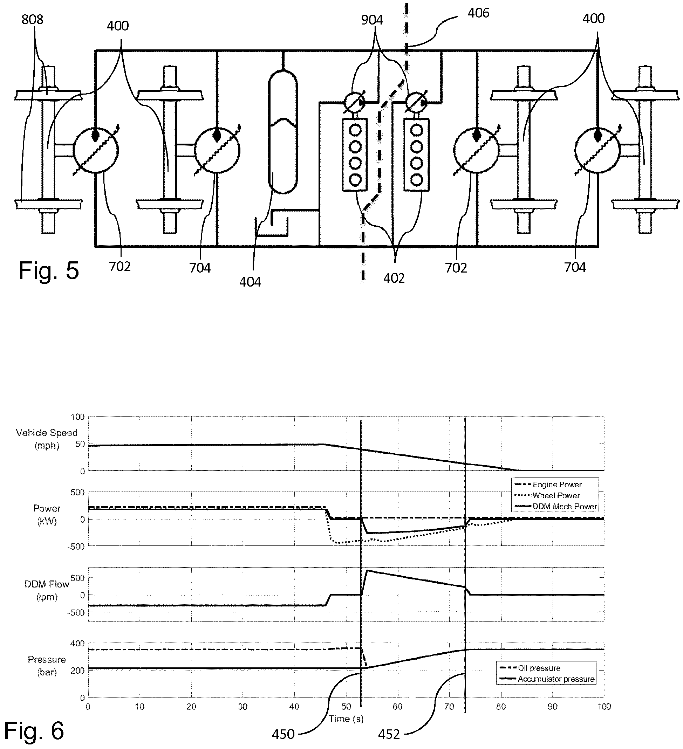

Figure 5 shows a simplified hydraulic schematic of a transmission in two combined units (left, and right of circuit division line 406) corresponding to two hydraulic motor bogies. Each unit corresponds to a single bogie, and comprises an EC variable displacement hydraulic pump 904 (which is typically an EC pump motor operable to work as a pump in a pumping mode and as a motor in a different, motoring mode) connected to a prime mover (engine 402 as illustrated) and two wheel system EC variable displacement hydraulic motors 702, 704 which are typically EC pump motors 702, 704 operable to work as a motor in a motoring mode or as a pump in a different, pumping mode, each driving a single axle 400. The units are hydraulically connected, however in an alternate mode they may work independently in isolation, the division and separation between the two units is at circuit division line 406, though naturally being part of the same train their function would be coordinated. Coordination might involve providing the same or slightly different wheel or axle torque. Coordination might involve providing a greater level of torque (positive or negative) to the wheel or axle which has less slip than the other wheel or axle. The coordination of the control of the two motors is also possible where they are not isolated and share the same hydraulic circuit, in which case there may in effect be a redistribution of pressurised fluid from a motor associated with the axle or wheel that is suffering more slip to another motor associated with an axle or wheel that is suffering less slip. This diversion of pressurised fluid (created by a pumping motor powered by decelerating axle, or provided to the motor to drive the axle), in an embodiment where different bogies and even different carriages have jointed hydraulic circuits, may result in diversion of fluid from one bogey to another on a single carriage or even between carriages. This coordination between controllable elements could be performed by digital communication over CAN.

The engines drive the engine system EC hydraulic pumps (which are typically EC variable displacement hydraulic pump motors 904 operable to work as variable displacement EC hydraulic pumps in a pumping mode and as variable displacement EC hydraulic motors in a different, motoring mode) which in turn provides pressurised hydraulic fluid which can be used to drive the wheel system variable displacement EC hydraulic motors 702, 704 (which are typically wheel system variable displacement EC pump/motors). The EC hydraulic motors drive the rail vehicle wheels 808. In essence this is a (series) hydrostatic transmission. However, the use of EC hydraulic machines allows for additional features such as energy storage in hydraulic accumulators, and so packaging of accumulators has to be considered. Another benefit of this system is that multiple engines (prime mover 402) can be used. This has a significant advantage that multiple smaller engines, that are able to fit within the tight height constraint, can be used. The decoupling of the engine from the axle 400 or wheels 808 with hydraulic hoses gives flexibility in the placement of the components that are slung under the vehicle. The hydraulic based system for propulsion, energy storage, and regenerative braking may be configured to be located under a carriage 750, or in a dedicated locomotive as part of a train.

Combining an engine system EC hydraulic pump driven by a combustion engine with a wheel system EC hydraulic motor to create a variable transmission creates a unique powertrain. Combining the EC hardware together gives a highly efficient transmission with the ability to mechanically decouple the wheels from the engine and operate the engine on its ideal efficiency curve. Also, with an energy storage device like an accumulator, braking energy can be stored in the accumulator using the pump/motor. Engine stop/start operation can be accomplished using the energy stored in the accumulator.

The components (engine / wheels / energy store / hydraulic machines etc.) may be operated in conjunction in a variety of different configurations or modes, as appropriate for the vehicle requirements. The following list provides a list of possible modes, which is not exclusive:

### Engine driven hydraulic drive

In respect of a first mode, the engine (as the prime mover) drives the pump which provides pressurised fluid to the motor, the motor is connected to the axle and thus wheels. This mode might be used during applying propulsion force to the vehicle, a so called 'acceleration event' (which may not result in actual acceleration, but will at least apply positive torque to the corresponding wheels), at a time that it is acceptable for the engine to be turned on, and under load.

### Hydraulic regeneration

In respect of a second mode, the motor may operate as a pump (when the wheels and axle are driven), thus pressurising fluid which according to this mode is fed to the energy store. If the energy store is in the form of an accumulator, the pressurised fluid is used to raise the pressure in the accumulator (i.e. to compress the gas portion in an oleo-pneumatic accumulator). Alternately when the energy store is in the form of a flywheel with connected hydraulic machine, the pressurised fluid is used to drive that machine and accelerate the flywheel mass. Thus this mode might be used to apply a deceleration force to the vehicle, when it is desired to harness the kinetic energy of the train. The convention brakes in a rail vehicle are non-regenerative meaning the energy is predominantly dissipated in the brakes & brake discs as heat arising from friction between the two.

### Wheel motor driven by energy storage system

In respect of a third mode, the energy store is fluidly connected to drive the motor, where the motor is torque-connected to the axle and thus also the wheels. This mode may be used in order to apply a propulsion force to the rail vehicle, when it is chosen not to load the engine (by pumping fluid from the connected pump), or when it is desirable to boost the pump flow and / or pressure to the motor with additional flow from the energy store. Thus in this mode the energy store is used solely, or in part, to propel the rail vehicle. When the energy store is an accumulator, this mode reduces the pressure in the accumulator (i.e. to decompress the gas portion in an oleo-pneumatic accumulator). When the energy store is a flywheel, the flywheel mass drives the connected hydraulic machine to produce pressurised fluid thus reducing the rotational velocity of the flywheel. Both embodiments of the energy storage device provide a flow of hydraulic fluid to the motor to drive the rail vehicle.

In respect of a fourth mode, the motor is supplied with energy from the energy store and from the pump:

### In a 1^{st} embodiment of the fourth mode:

The engine driven pump and pressurised fluid is supplied to a single high pressure fluid gallery to which the energy store system is also connected. Pressure and flow fluctuations in the gallery are interdependent with the state of the system components. As such, if there is low pump output & high motor demand, this will lead to reduction in the accumulator level (consuming accumulator stored energy). Consequently it will be necessary to selectively isolate the energy store, given that its pressure will drop as energy is extracted therefrom. An energy store isolation valve may provide this functionality. Where the energy store is accumulator system, this valve could be operated such that it is kept open above the pre-charge pressure of the accumulator. In the instance that such accumulator system needed to be reconnected to the high pressure fluid gallery, so it would be necessary to match the pressure either side of the valve prior to reconnection, to ensure stable operation of the transmission.

### In a 2^{nd} embodiment of the fourth mode:

The motor has a first service connected to the energy store (operating at a first pressure and flow), and the motor has a second service connected to the pump (operating at a potentially different second pressure and flow). Thus the first pressure and flow seen by the first service is allowed to vary independently in pressure and flow relative to the second service. This allows the energy store to be drained or emptied to a level at which it is ready to receive a 'full charge' of energy during a braking event. It may be desired not to connect a single motor service to both the energy store and the pump. If, towards exhaustion, the energy flow from the energy store dropped, a switch can be used to isolate the accumulator to avoid a situation where energy from the pump is used to charge the accumulator directly.

The first and second services may belong to a single motor, or to separate motors.

### In a 3^{rd} embodiment of the fourth mode:

This is the same as the 2^{nd} embodiment except the two independent services are replaced by two independent motors, each torque connected to one or more axles. Similar to the 2^{nd} embodiment, the circuits may adopt different flow and / or pressure to each respective motor, which is beneficial (as explained in reference to the above 2^{nd} embodiment).

### Selective commoning of services / motors:

For the 2^{nd} embodiment, it is important to be able to common the two services, as required. For the 3^{rd} embodiment it is important to be able to common the motors, as required. It is important, to avoid redundancy, to be able to provide full torque at each motor at zero speed. In particular this means that the idea of having a service or motor dedicated to energy store is less preferable, as if the accumulator is discharged, it is not possible to drive the connected motor using a discharged accumulator. The solution is to provide a selectively connectable fluid connection between the two services (in 2^{nd} embodiment) or between the two motors (in 3^{rd} embodiment), to 'common' their respective flow. In the example provided of a discharged accumulator, at zero speed the pump would be chosen to be selectively connected to the common connection, thus providing fluid to both motors, including the motor that would otherwise only be subject to the discharged accumulator pressure (i.e. no useful drive would be provided).

In respect of a fifth mode, the energy store drives the pump, which in turn could be used to torque-support the engine, or to crank (start) the engine (as an alternative to using a conventional starter motor).

In respect of a sixth mode, at least some of the engine power is used to drive the pump, in order to charge the energy store.

In respect of a seventh mode, the motor is operated as a pump, during a braking event for example, and the corresponding pressurised hydraulic fluid is used to drive the pump, which in turn drives the corresponding prime mover (typically to support the engine torque).

As shown in Figure 14, the engine system EC pump 904 is mounted directly to the engine (prime mover 402) by means of a bell housing 902 and flexible coupling. A normal operational pressure limit may be a couple of hundred bar, due to ratings of hydraulic components such as hoses, and so the volume of the pump is sized such that the engine power can be converted at the optimal speed on the BSFC curve (brake specific fuel consumption).

The engines can be operated at the optimum speeds for any power level independently of the wheel-speeds in order to reduce fuel consumption to a minimum.

The EC based variable transmission and engine (prime mover 402) are coupled mechanically with or without a clutch between the engine and the EC hydraulic pump 904 and the EC hydraulic motor 702, 704 connected to the drive wheels through a ratio device or without a ratio device, the EC hydraulic pump 904 supplies fluid flow and regulates pressure to the EC hydraulic motor 702, 704. The hydraulic motor 702, 704 translates this flow and pressure to torque and speed through its output shaft.

In preferred embodiments, an accumulator 404 is provided which is charged with fluid pressure during vehicle braking events using the EC hydraulic motor 702, 704 driven by the powertrain (the EC hydraulic motor 702, 704 is in this case a hydraulic pump motor operating in a pumping mode) to raise the pressure in the accumulator. As the powertrain driven pump/motor 702, 704 is being used as a pump, it generates a resistance to rotation applying torque to the powertrain applying negative torque to the powertrain to reduce the vehicle speed. As is understood by one skilled in the art, the powertrain is involved in accelerating or decelerating the vehicle, and is the energy converting and transferring apparatus primarily responsible for transfer of kinetic energy from the prime mover, output to the kinetic energy desired at the wheels. Thus, a non-exclusive list of powertrain component parts includes the wheels, axles, gearbox, hydraulic motors, hoses for transmitting fluid energy, hydraulic pumps, and prime mover.

The hydrostatic transmission removes many of the constraints which usually apply to DMU (Diesel Multiple Unit) engine selection. The engine (prime mover 402) drives a pump 904 which is connected, via fixed-pipes and hoses, to the hydraulic motors 702, 704 with zero speed ability. With this configuration the prime mover 402 (engine in this case) no longer needs to be physically aligned within the main driveline. The power from multiple smaller engines, each with its own EC pump 904, can be coupled together by commoning of hydraulic hoses. Alternate engines, such as those mounted in the vertical plane rather than the horizontal plane, can be considered. The decoupling of the driveline by means of flexible hoses allows the engine raft to be mounted on soft elastomeric mounts. The mounting stiffness and damping can be optimised to reduce vibration transmitted from the engine to the passenger space without the gearbox alignment constraint. Reduced cabin vibration results in a quieter traveling experience for passengers. Reduction in the unsprung mass seen by the rails is beneficial to the health and longevity of the rails or track as a whole. A large unsprung mass of the rail vehicle will provide large impulses and forces to the rails and track, thus accelerating wear. It is therefore preferable to provide a resilient connection between the bulk of the mass of the rail vehicle, and the wheels which run against the rails of the track.

As mentioned above, Figure 5 shows a pair of hydraulically connected systems, each comprising wheels 808 plus EC motors 702, 704 fluidly connected to an EC pump 904 torque connected to a respective prime mover 402. The illustrated pair of systems would be mounted to a pair of (not shown) bogies under a single carriage. Alternately the two systems could be hydraulically separate, divided along the line 406, in which case one system may be omitted such that the carriage has only a single such system. It will be understood that a single system with a pump 904 (torque connected to a prime mover) may alternately be connected to fewer or more than two EC motors 702, 704 (torque connected to the wheels).

In respect of setting an acceleration rate, to improve journey times, the EC motor 702, 704 is sized for high tractive effort. However, the amount of tractive effort that can be applied to the wheel sets is limited by traction and by passenger comfort.

On passenger trains travelling suburban routes, two out of the four wheel-sets are typically driven. Typical high-speed EC pumps and motors are based on radial geometry with a number, most often six, of 'pumping-groups' (piston, cylinder & valves) arranged around a single-eccentric crankshaft to form a 'bank' of cylinders.

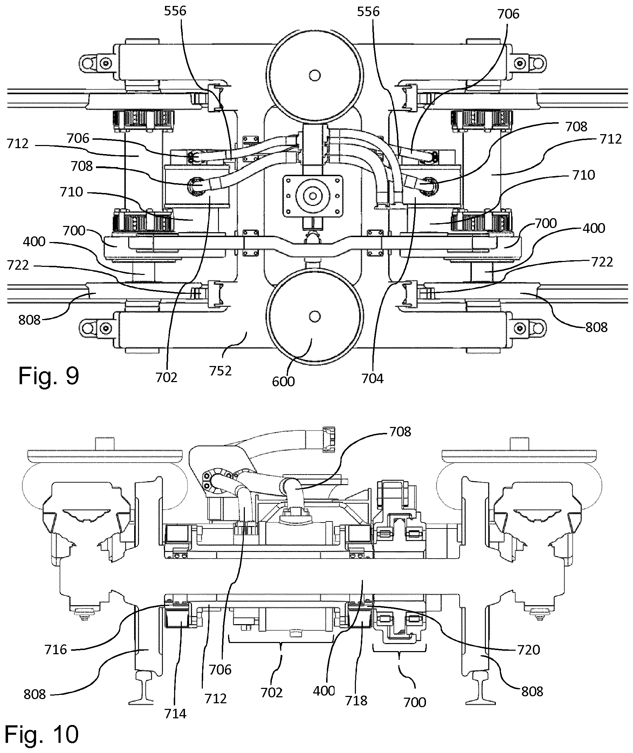

Figure 9 shows a powered bogie arrangement with two independent EC pump-motors 702, 704 each mounted at only one end (cantilevered), and each driving or being driven by a respective axle 400 and pair of wheels 808.

Figure 10 shows a sectional end-view of the same powered bogie of Figure 9, showing contributions to the unsprung mass (in the form of the wheels 808, the axle 400, and the damper bottoms), and items supported by the primary suspension (in the form of the gearbox 700, the EC motor 702). The Figure shows the quill shaft 712, axle 400 plus wheels 808 (both the axle and wheels are unsprung) and EC motor 702 plus gearbox 700 (both suspended).

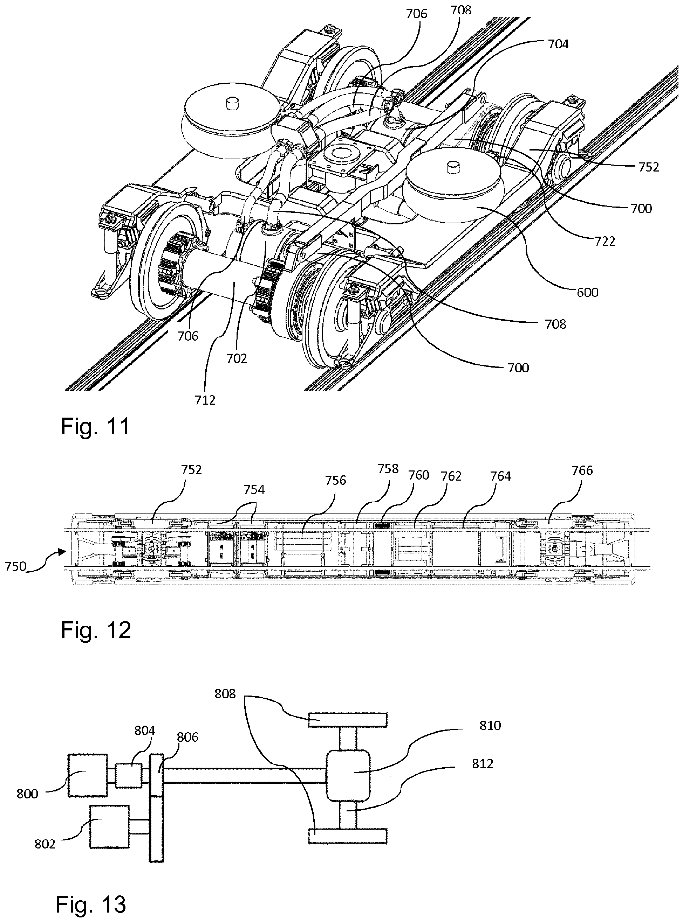

Figure 11 shows an isometric version of Figures 9 & 10. It includes the gearbox 700 for the final drive gear, which as shown, encompasses the axle 400 and especially a gear around the axle, which meshes in turn directly with another gear on the shaft 108, 110 of the respective EC machine 702, 704. The gearbox 700 case for the final gear extends to cover the correspondingly meshed gear on the shaft of the respective EC machine 702, 704. Although the bogie may comprises a pair of EC motors 702, 704 with zero speed ability, alternately there may be a single EC motor with zero speed ability per bogie, driving one or both axles.

EC wheel system motors are mounted to the bogie 752 with viscoelastic elements 600 that provide damped suspension. This results in a small amount of travel between the motor 702, 704 and the bogie 752 and so flexible hydraulic hoses are used to accommodate for this movement. From the bogie 752 further flexible hoses are used to provide a hydraulic coupling to the carriage 750 onto which the pumps 904 are mounted.

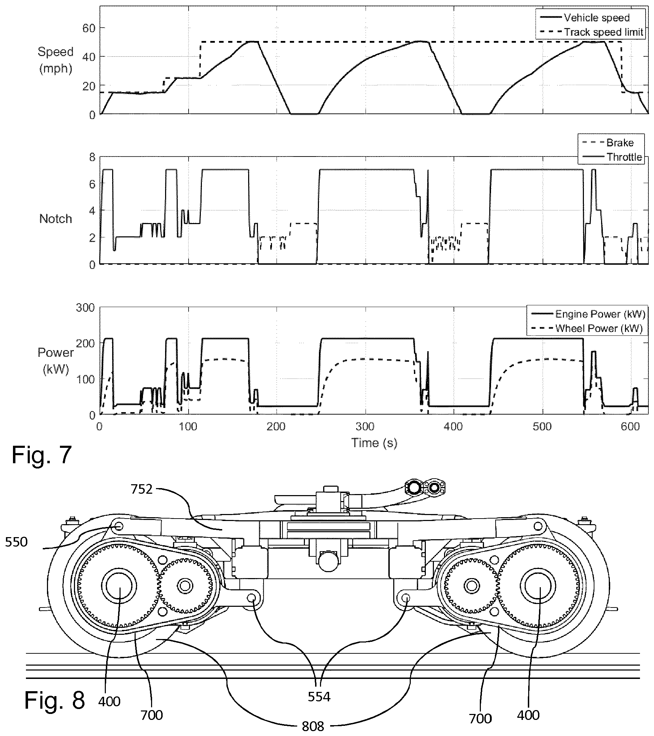

Figure 8 is a side view, showing inside the single-stage speed-increasing gearboxes. Given the high force / load transmitted through these gears, helical gears may be preferable to straight cut gears.

The invention makes use of hydraulic pumps or motors which are controllable to displace pulses of hydraulic fluid of known volume into or out of a hydraulic circuit region. The volume of a pulse may be known because it is controlled and/or because it is measured. Suitable variable displacement hydraulic pumps and motors for carrying out the invention include those which comprise a rotating shaft and a plurality of cylinders of cyclically varying working volume, in which the displacement of hydraulic fluid through each cylinder is regulated by electronically controllable valves, on each cycle of cylinder working volume, and in phased relationship to cycles of cylinder working volume, to determine the net throughput of hydraulic fluid by the machine. For example, the variable displacement hydraulic pumps and motors for carrying out the invention may use a method (e.g. as disclosed in EP 0361927 (which is incorporated herein in full by reference)) of controlling the net throughput of hydraulic fluid through a multi-cylinder pump by opening and/or closing electronically controllable valves, in phased relationship to cycles of cylinder working volume, to regulate fluid communication between individual cylinders of the pump and a low pressure hydraulic fluid line. As a result, individual cylinders are selectable by a valve control module, on each cycle of cylinder working volume, to either displace a predetermined fixed volume of hydraulic fluid (an active cycle), or to undergo an inactive cycle (also referred to as an idle cycle) in which there is no net displacement of hydraulic fluid, thereby enabling the net throughput of the pump to be matched dynamically to demand. Additionally or alternatively the hydraulic pumps and motors for carrying out the invention may use a further developed method described in EP 0494236 (which is incorporated herein in full by reference) which includes electronically controllable poppet valves, which regulate fluid communication between individual cylinders and a high pressure hydraulic fluid line, thereby facilitating the provision of a hydraulic motor (which in some embodiments may function as a pump or a motor in alternative operating modes). Additionally or alternatively the hydraulic pumps and motors for carrying out the invention may use a method described in EP 1537333 (which is incorporated herein in full by reference) which introduced the possibility of active cycles in which only part of the maximum displacement of an individual cylinder was selected (part mode cycles).

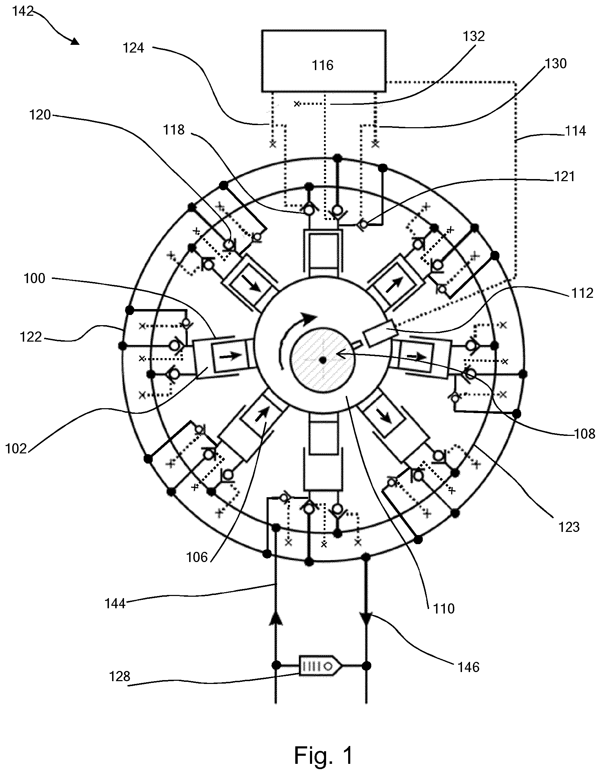

Figure 1 illustrates the hydraulic motor 16 in the form of an electronically commutated hydraulic pump/motor comprising a plurality of cylinders 100 which have working volumes 102 defined by the interior surfaces of the cylinders and pistons 106 which are driven from a rotatable shaft 108 by an eccentric cam 110 and which reciprocate within the cylinders to cyclically vary the working volume of the cylinders. The rotatable shaft is firmly connected to and rotates with the generator drive shaft. A shaft position and speed sensor 112 determines the instantaneous angular position and speed of rotation of the shaft, and through signal line 114 informs the machine controller 116 of the motor, which enables the machine controller to determine the instantaneous phase of the cycles of each cylinder.

The cylinders are each associated with Low Pressure Valves (LPVs) in the form of electronically actuated face-sealing poppet valves 118, which face inwards toward their associated cylinder and are operable to selectively seal off a channel extending from the cylinder to a low pressure hydraulic fluid line 120, which may connect one or several cylinders, or indeed all as is shown here, to the low pressure hydraulic fluid line 144 of the vehicle. The LPVs are normally open solenoid closed valves which open passively when the pressure within the cylinder is less than or equal to the pressure within the low pressure hydraulic fluid line, i.e. during an intake stroke, to bring the cylinder into fluid communication with the low pressure hydraulic fluid line, but are selectively closable under the active control of the controller via LPV control lines 124 to bring the cylinder out of fluid communication with the low pressure hydraulic fluid line. Alternative electronically controllable valves may be employed, such as normally closed solenoid opened valves.

The cylinders are each further associated with High Pressure Valves (HPVs) 126 in the form of pressure actuated delivery valves. The HPVs open outwards from the cylinders and are operable to seal off a channel extending from the cylinder to a high pressure hydraulic fluid line 122, which may connect one or several cylinders, or indeed all as is shown here, to the transmission high pressure hydraulic fluid line 146. The HPVs function as normally-closed pressure-opening check valves which open passively when the pressure within the cylinder exceeds the pressure within the high pressure hydraulic fluid line. The HPVs also function as normally-closed solenoid opened check valves which the controller may selectively hold open via HPV control lines 132 once that HPV is opened by pressure within the associated cylinder. Typically the HPV is not openable by the controller against pressure in the high pressure hydraulic fluid line. The HPV may additionally be openable under the control of the controller when there is pressure in the high pressure hydraulic fluid line but not in the cylinder, or may be partially openable, for example if the valve is of the type and is operated according to the method disclosed in WO 2008/029073 or WO 2010/029358.

In a normal mode of operation described in, for example, EP 0 361 927, EP 0 494 236, and EP 1 537 333, the contents of which are hereby incorporated herein by way of this reference, the motor controller selects the net rate of displacement of fluid from the high pressure hydraulic fluid line by the hydraulic motor by actively closing one or more of the LPVs shortly before the point of minimum volume in the associated cylinder's cycle, closing the path to the low pressure hydraulic fluid line which causes the fluid in the cylinder to be compressed by the remainder of the contraction stroke. The associated HPV opens when the pressure across it equalises and a small amount of fluid is directed out through the associated HPV. In a motoring configuration, it is required that the EC machine comprises an active HPV (a 'switchable' HPV). A typical actuation means is an electronic solenoid, although there are other possibilities: hydraulic actuation, magnetostrictive, piezoelectric etc. The motor controller then actively holds open the associated HPV, typically until near the maximum volume in the associated cylinder's cycle, admitting fluid from the high pressure hydraulic fluid line and applying a torque to the rotatable shaft. In an optional pumping mode the controller selects the net rate of displacement of fluid to the high pressure hydraulic fluid line by the hydraulic motor by actively closing one or more of the LPVs typically near the point of maximum volume in the associated cylinder's cycle, closing the path to the low pressure hydraulic fluid line and thereby directing fluid out through the associated HPV on the subsequent contraction stroke (but does not actively hold open the HPV). The controller selects the number and sequence of LPV closures and HPV openings to produce a flow or create a shaft torque or power to satisfy a selected net rate of displacement. As well as determining whether or not to close or hold open the LPVs on a cycle by cycle basis, the controller is operable to vary the precise phasing of the closure of the HPVs with respect to the varying cylinder volume and thereby to select the net rate of displacement of fluid from the high pressure to the low pressure hydraulic fluid line or vice versa.

Arrows on the ports 144, 146 indicate fluid flow in the motoring mode; in the pumping mode the flow is reversed. A pressure relief valve 128 may protect the hydraulic motor from damage.

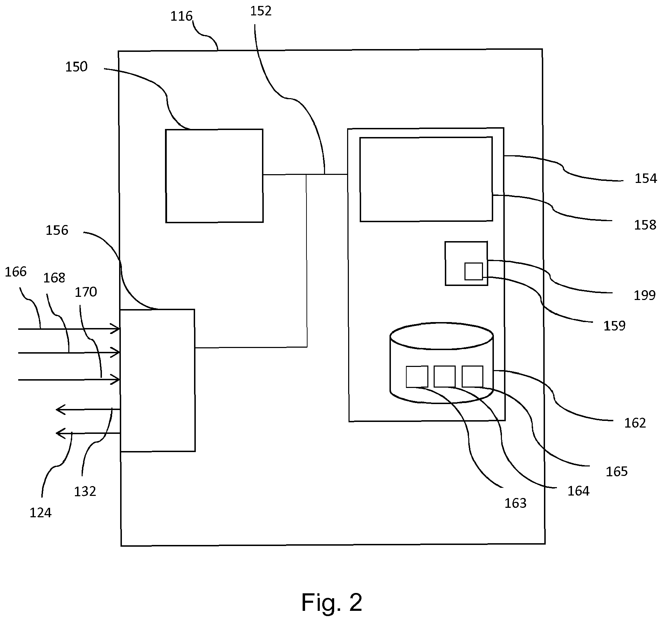

Figure 2 is a schematic diagram of the machine controller 116 of the motor. The structure of the pump controller corresponds. A processor 150, such as a microprocessor or microcontroller, is in electronic communication through a bus 152 with memory 154 and an input-output port 156. The memory stores a program 158 which implements execution of a displacement determination algorithm to determine the net volume of hydraulic fluid to be displaced by each cylinder on each cycle of cylinder working volume, as well as one or more variables 199 which store an accumulated displacement error value and the memory also stores a database 162 which stores data concerning each cylinder, such as the angular position of each cylinder 163 and whether or not it is deactivated 164 (for example, because it is broken). In some embodiments, the database stores the number of times 165 each cylinder has undergone an active cycle. In some embodiments, the program comprises program code 159, functioning as the resonance determining module, which calculates one or more ranges of undesirable frequencies.

The controller receives a displacement demand signal 148, a shaft position (i.e. orientation) signal 166 and typically a measurement of the pressure 168 in the high pressure line, and a further input signal 170. The speed of rotation of the rotatable shaft is determined from the rate of change of shaft position and function as the speed of rotation of the rotatable shaft The outputs from the controller include high pressure valve control signals through high pressure valve control lines 126 and low pressure valve control signals through low pressure valve control lines 118. The controller aims to match the total displacement from the cylinders to the displacement demand, over time. The shaft position is required to enable valve control signals to be generated in phased relationship with cycles of cylinder working volume. The measurement of pressure can be used to determine the exact amount of hydraulic fluid displaced or in other calculations. The controller might also receive signals indicating whether cylinders are broken, and should therefore be disabled, and to enable the database 162 to be updated accordingly.

The hydraulic pump 904 generally corresponds to the hydraulic motor 702, 704 except that it generally operates in the pumping mode described above and is typically on a larger scale. Instead of a single lobed eccentric there may be more, in the case of a multi-lobe ring cam. The high pressure valves 120 need not be actively controlled by the controller 116 and may comprise check valves.

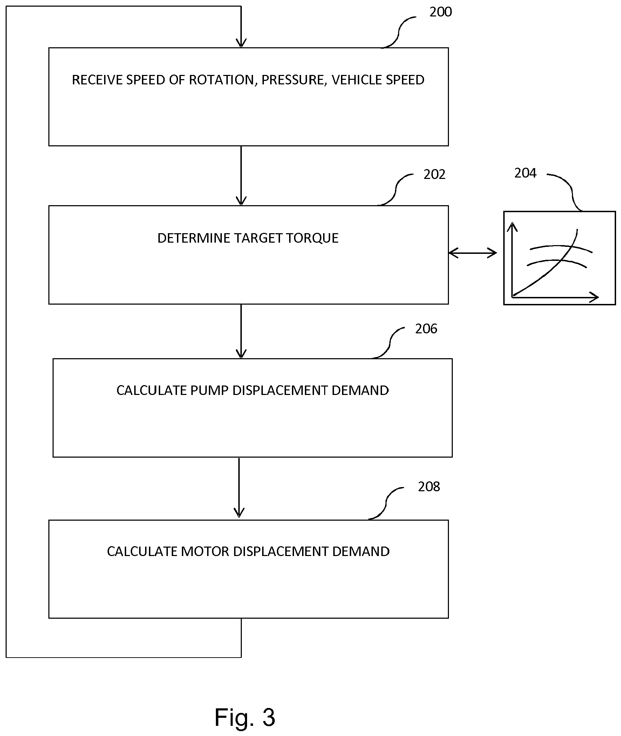

During operation of the hydraulic transmission by the process of Figure 3, the hydraulic transmission controller 156 receives 200 input signals (166, 168, 170) including the speed of rotation of the prime mover 402 (which is the same as, or a geared ratio of the speed of rotation of the rotatable shaft of the hydraulic pump, as the two are coupled), and the pressure in the pressurised fluid hydraulic fluid line 140, as well as the vehicle speed. The transmission controller next determines 202 a target torque to be applied to the prime mover 402 by the hydraulic pump 904, with reference to a look up table 204 which summarises ideal target torque and shaft rotation speed at a plurality of different vehicle speeds. Once a target torque has been determined the transmission controller then calculates 206 the displacement of the hydraulic pump 904 required to obtain the target torque. This is then transmitted to the hydraulic pump 904 as the displacement demand signal (148) received by the pump 904. Volumes of hydraulic fluid and rates of displacement may be calculated in any suitable units. This displacement demand can for example be expressed as a fraction of the maximum displacement of which the hydraulic pump is capable per revolution of the rotatable shaft. In this example, the displacement is expressed as an average percentage of the maximum output per revolution of the rotatable shaft. The actual rate of displacement which this represents, expressed as volume of fluid per second, will be the product of both the displacement demand, the maximum volume which can be displaced by a cylinder, the number of cylinders and the speed of rotation of the pump rotatable shaft. The resulting torque will be proportional to this displacement and to the pressure in high pressure hydraulic fluid line.

Once the pump displacement has been calculated, the motor displacement can also be calculated. Typically, the motor displacement is calculated to maintain a desired pressure in the pressurised fluid line. The calculated displacement is transmitted to the motor and received as the demand displacement signal of the motor. However, a number of other factors may be taken into account. For example, the motor displacement demand can be varied in order to vary the pressure in the high pressure hydraulic fluid line, which increases when motor displacement is less than the displacement by the hydraulic pump (in volume per second), and decreases when the displacement of the hydraulic motor is greater than the displacement of the hydraulic pump (in volume per second). There may be other factors. For example, it may be desirable for one or both of the electricity generators to be switched between being driven at a substantially constant torque, and being switched off, to minimise windage losses and maximise the efficiency of electricity generation.

In this example embodiment, the hydraulic motor has the mode of Figure 1, in which the cam which drives the pistons has a single lobe, and so there is a single cycle of cylinder working volume per rotation of the rotatable shaft of the hydraulic motor.

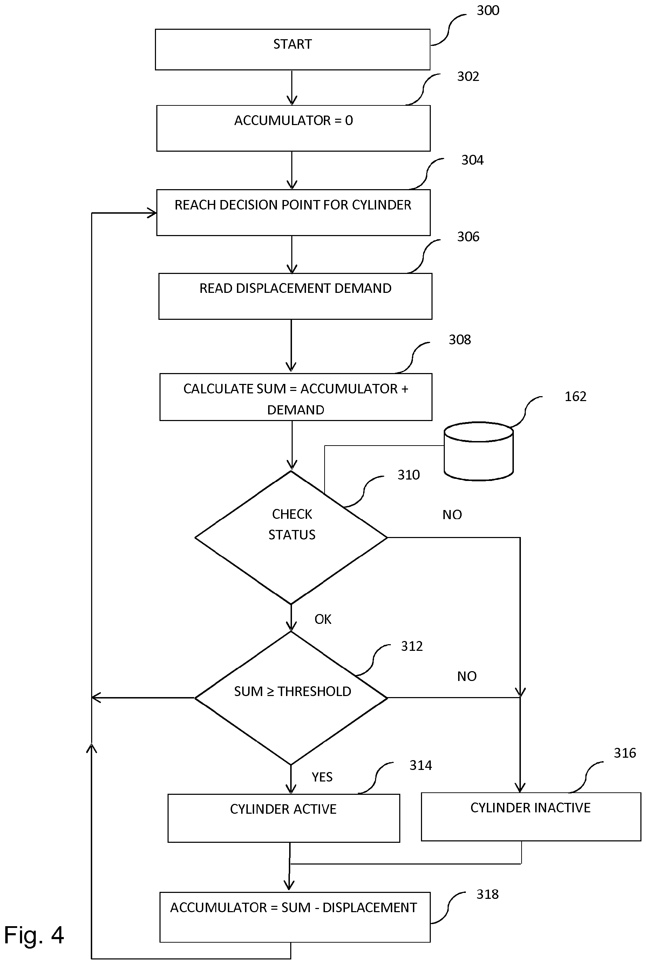

Figure 4 illustrates the procedure carried out by the hydraulic motor to determine the net displacement by each cylinder sequentially, in a default operating procedure (the first procedure), when it is not determined that unwanted frequencies will be generated. The procedure begins 300, whereupon a stored variable algorithmic accumulator is set 302 to zero. The 'algorithmic accumulator', is more commonly known in computer science as an 'accumulator', however a different term is used here to differentiate from the entirely different concept of a hydraulic accumulator.

The variable algorithmic accumulator stores the difference between the amount of hydraulic fluid displacement represented by the displacement demand and the amount which is actually displaced.

The rotatable shaft of the hydraulic motor then rotates until it reaches 304 a decision point for an individual cylinder. For the example shown in Figure 1, there are eight cylinders, and so each decision point will be separated by 45 degrees of rotation of the rotatable shaft. The actual period of time which arises between the decision points will therefore be the period of time required for the rotatable shaft to rotate by 45 degrees, which is inversely proportional to the speed of rotation of the rotatable shaft.

At each decision point, the motor controller reads 306 the motor displacement demand received from the transmission controller. The controller then calculates 308 a variable algorithmic sum which equals algorithmic accumulator plus the demanded displacement. Next, the status of the cylinder which is being considered is checked 310. This is carried out with reference to the database 162, 164 of cylinder data. If it is found that the cylinder is deactivated (for example because it is broken), no further action is taken for that cylinder. The method then repeats from step 304 once the decision point is reached for the next cylinder.

Alternatively, if it is found that the cylinder has not been disabled, then algorithmic sum is compared 312 with a threshold. This value may simply be the maximum volume of hydraulic fluid displaceable by the cylinder, when the only options being considered are an inactive cycle with no net displacement or a full displacement active cycle in which the maximum displacement of hydraulic fluid by the cylinder is selected. However, the threshold may be higher or lower. For example, it may be less than the maximum displacement by an individual cylinder, for example, where it is desired to carry out a partial cycle, in which only part of the maximum displacement of the cylinder is displaced.

If algorithmic sum is greater than or equal to the threshold then it is determined that the cylinder 100 will undergo an active cycle 314. Alternatively, if algorithmic sum is not greater than or equal to the threshold then it is determined that cylinder 100 will be inactive 316 on its next cycle of cylinder 100 working volume, and will have a net displacement of zero. The accumulator value will be calculated 318 according to the displacement subtracted from the algorithmic sum.

Control signals are then sent to the low 118 and high 120 pressure valves for the cylinder 100 under consideration to cause the cylinder to undergo an active or inactive cycle, as determined. (In the case of pumping, it may be that the high pressure valves are not electronically controlled and the control signals only concern the low pressure valves). The control signals are transmitted across the respective control line 124 (low pressure) and 132 (high pressure) for the particular valve associated with the cylinder under consideration.

This step effectively takes into account the displacement demand represented by the displacement demand signal, and the difference between previous displacements represented by the displacement demand signal previous net displacements determined by the controller (in this case, in the form of the stored error), and then matches the time averaged net displacement of hydraulic fluid by the cylinders to the time averaged displacement represented by the displacement demand signal by causing a cylinder to undergo an active cycle in which it makes a net displacement of hydraulic fluid, if algorithmic sum equals or exceeds a threshold. In that case, the value of the error is set to SUM minus the DISPLACEMENT by the active cylinder. Alternatively, if algorithmic sum does not equal or exceed the threshold, then the cylinder is inactive and algorithmic sum is not modified.

The procedure restarts from step 304 when the decision point is reached for the next cylinder.

It can therefore be seen that algorithmic accumulator maintains a record of the difference between the displacement which has been demanded, and the displacement which has actually occurred. On each cycle, the demanded displacement is added to the displacement error value, and the actual selected displacement is subtracted. Algorithmic accumulator effectively records the difference between demanded and provided displacement and an active cycle takes place whenever this accumulated difference exceeds a threshold.

One skilled in the art will appreciate that the effects of this displacement determination algorithm can be obtained in several ways. For example, rather than subtracting the selected displacement from the algorithmic accumulator variable, it would be possible to sum the displacement which has been demanded, and the displacement which has been delivered, over a period of time, and to select the displacement of individual cylinders to keep the two evenly matched.

In alternative embodiments, there may be sets of cylinders which are operated in phase throughout each cycle of cylinder working volume. For example, this may arise if the cam has multiple lobes or if there are multiple axially spaced banks of cylinders. In this case, at each decision point the selection of an active cycle or inactive cycle may be made for each cylinder in the set at once.

A machine controller 116 is provided to control valve timing, and correctly commutate the EC machine 142 amongst other things. In one embodiment, there would be one machine controller 116 per EC machine, however in other embodiments both pumps 904 and/or both motors 702, 704 may be controlled by the single controller 116. There is typically a machine controller 116 for each EC machine 702, 704. In an alternate embodiment, one machine controller ('slave') may be provided to extend the effective FET board of another ('master') controller. Thus the possible functions the slave controller may carry out are limited, and it simply acts as an extension of the master machine controller 116 which comprises its own FET board but also carries out the timing control. The use of two EC machine controllers 116 might be motivated for example if a single EC machine controller 116 doesn't on its own have enough channels or if one EC machine controller 116 can't provide enough current for each machine.

In another embodiment, all functions for controlling two or more EC machines are consolidated in a single controller, which might be motivated for example to minimise space requirements.

Each axle 400, or axle pair on a bogie 752, may have a dedicated controller responsible for control of braking (possibly including anti slip control). The global/overall controller may demand a level of braking torque, of the braking controllers, and it will be the braking controllers which resolve the task of balancing the braking force provided by the brakes 722 and that provided by the EC motors 702, 704 in pumping mode (regeneration).

Energy storage allows the vehicle's kinetic energy, which is usually dissipated as heat during braking, to be captured and stored such that it can be used for propulsion of the train at the next opportunity. This braking energy-capture is achieved by temporarily operating the EC motors as pumps instead of as motors. The hydraulic power generated by pumping is supplied to an energy store, for use at a later point in time. As an alternative to accumulators, that energy may be stored in flywheels. Each flywheel is connected to a hydraulic machine (hydraulic pump motor operable as a pump in pumping mode or a motor in motoring mode) which may subtract torque from a rotating flywheel as a pump, or increase the flywheel velocity and subtract pressure as a hydraulic motor.

Accumulators work by allowing pressurised oil to progressively fill a volume that is initially occupied by nitrogen gas at a 'pre-charge' pressure. The gas is separated from the oil by either a rubber bladder (bladder accumulator) or by a sealed piston (piston accumulator). By using accumulators, some of the kinetic energy of the train's motion would thus be stored as potential energy in the compressed gas, ready to be deployed for propulsion of the train. For larger accumulator sizes, over about 50 litres and particularly when mounted horizontally, piston accumulators tend to be superior to bladder accumulators.

In respect of the accumulator hydraulic connection, accumulators provide a means of energy storage in the EC hybrid transmission. When the vehicle 750 is to be decelerated, the EC pump-motors 702, 704 act as pumps which serve high pressure fluid to the accumulators, thus raising the system pressure. At other times, the pressure may be controlled independently of the accumulator state (for instance, when a fast torque response is needed) and this requires that the accumulators be isolated. When accumulators are connected, the hydraulic pressure is determined by the gas pressure (the amount of stored energy available). When the accumulators are isolated, the EC pumps 904 or EC motors 702, 704 can be controlled to determine the system pressure.

In respect of braking energy recovery, kinetic energy of the train can be captured by opening the accumulator isolator-valve. Thus high pressure hydraulic fluid is released to the EC motor 702, 704 operated as a pump. This provides an alternate means of decelerating the rail vehicle 750, to using its friction brakes 722.

Figure 6 shows a series of graphs illustrating characteristics of the EC motor, which pumps during braking to store energy in accumulators. On the 'Power' graph, the excursion of the solid line (labelled 'DDM Mech Power') below the '0'kW level represents the total braking power which is absorbed by the EC motors and stored in the accumulator system.

In the same Figure, at time 52 seconds (line 450), the isolator valve is open, and the EC motor adds to the braking effort and pumps to increase the accumulator pressure. At time 72 seconds (line 452), the energy storage is filled so the shut-off valve is closed and the braking effort is completed by the friction brakes 722.

In one embodiment, global/overall control is implemented in a dedicated controller, or alternately it may be implemented in one of the machine controllers 116. The controllers may communicate with one another and are linked via CAN (Controller Area Network), and ancillaries and accessories may also be connected via CAN. Each ancillary/accessory, and each controller may define a CAN Node. The task of the global/overall controller is to determine the correct machine displacement, torque, and flow.

Controller area network (CAN) is a serial bus system especially suited for networking "intelligent" devices as well as sensors and actuators within a system or subsystem. CAN is a serial bus system with multi-master capabilities, that is, all CAN nodes are able to transmit data and several CAN nodes can request the bus simultaneously. The serial bus system has real-time capabilities, and in CAN networks there is no addressing of subscribers or stations in the conventional sense, but instead, prioritized messages are transmitted.

A transmitter sends a message to all CAN nodes (broadcasting). Each node decides on the basis of the identifier received whether it should process the message or not. The identifier also determines the priority that the message enjoys in competition for bus access. The relative simplicity of the CAN protocol means the CAN chips interfaces make applications programming relatively simple.

Alternate network topologies are possible, many of which may be readily be imagined by one skilled in the art. For example, the train communication network (TCN) is a combination of two fieldbus systems for digital operation of trains. It consists of the multifunction vehicle bus (MVB) inside each coach and the wire train bus (WTB) to connect the MVB parts with the train control system.

In respect of an engine stop-start strategy, with sufficient charge in accumulator, the pump connected to the engine (prime mover 402) can be selectively operated as a motor in order to crank the engine (in effect taking over the role of starter motor).

In respect of a single engine shut-down strategy, the two engines are coupled to the wheel-motors hydraulically, so that one of the engines can be shut off to save fuel when lower wheel powers are required, providing the required power can be supplied by single engine.

The engine alternator may be driven by a hydraulic motor. Whereas previously this motor required an additional pump, driven by the engine (prime mover 402) to provide hydraulic power, a converted vehicle comprising the present invention could use the main engine supply pumps 904 as the source of pressurised hydraulic fluid. This helps to simplify the hydraulic circuit and reduce the number of components. The cooling fans for engine radiators would similarly source motive power from the main engine supply pumps 094.

In a flywheel energy store, some of the vehicle's kinetic energy would be transferred into the kinetic energy of a spinning mass. This would require an additional, high speed, hydraulic machine 16 to operate as a motor when accelerating the flywheel and as a pump when extracting energy.

To improve value and reduce weight, additional gas volume is provided in the form of backup bottles 756 allowing the piston to sweep the full length of the accumulator. The total volume of accumulator is a compromise between many parameters including weight, cost, the oil volume required and the kinetic energy available during braking.

The way in which this stored energy is used will depend on the desired system performance.

If emissions at a train station are of concern, the vehicle could be accelerated out of the station with the engines shut off up to a speed of about 30 mph or up to a certain distance from the station. Alternatively, if reduced journey time is more important, the stored energy can be used to boost the engine power during acceleration. These control strategies are flexible and are discussed in more detail further below.

The rail vehicle may comprise an underframe, or more likely is of fully integral, monocoque construction. Rafts may be bolted into slots on the underframe or the monocoque construction, and components collected in and mounted to these rafts. A raft is typically a compliantly mounted holding frame, which may be suspended under the rail vehicle, to house various possible powertrain and or auxiliary equipment. A single raft may house all of the auxiliaries required for the train's hotel loads. Rafts may optionally house at least one engine. A bogie is a chassis or framework carrying wheels, attached to a vehicle, serving as a modular subassembly of wheels and axles. It may contain a suspension within it, or be solid and in turn be suspended, it may be mounted on a swivel and additionally jointed and sprung, or held in place by other means.

The mounting arrangement proposed sees the complete mass of the EC motors 702 704 and gearbox 700 hung from the bogie 752 after the primary suspension. A quill shaft 712 then transmits the torque from the final-drive gearbox 700 to the axle 400. Therefore, the only additional mass that rides on the axle is that of half of the quill shaft 712.

There are preferably 3 point mountings between the gearbox and the bogie, according to the most preferable and kinematically optimised embodiment, comprising a first mount point 550, a second mount point 554, and a third mount point

Although one end of the EC motor 702, 704 is resiliently mounted via a rod/tie to the bogie 752, the end of the rod/tie is ideally allowed to pivot/turn arounds its origin.

Figure 12 shows the vehicle underside layout.

The rail vehicle can accelerate using one of a number of different acceleration strategies:
- Variable transmission only: if there is no energy storage installed on the train or if there is no energy stored at the moment of 'launching' from a station, the train will accelerate solely with the engine-driven EC pumps. The EC hybrid could be torque-limited up to a particular power or speed, and then the EC hybrid could be power-limited from that point onwards.
- Eco mode: if there is energy stored in the accumulator, the controller can open the accumulator isolator-valve so the EC motor can access the stored energy for vehicle acceleration. Once the stored energy is exhausted, the vehicle can continue to accelerate using engine power only. To reduce emissions within stations it may be possible to launch with engines off.
- Boost mode / hybrid full throttle: this mode is for starting from zero speed. At low speeds, a rail vehicle's acceleration is typically limited by the wheel grip or traction available before wheel slip occurs. The highest level of acceleration is therefore capped by a torque limit. At higher speed, the rail vehicle's upmost acceleration is typically limited by the prime mover capacity, more precisely a power limit. Essentially, the rail vehicle starts in a torque limit region which transitions to a power limit region at higher speeds. The corresponding drive strategy is to start from zero utilising solely the engine(s), then transition to engine(s) + accumulator power, and finally once the accumulator pressure is used up, the final transition is back to solely the engine(s). After the final transition, the rail vehicle's upmost acceleration is limited by the power that the engine(s) can produce.
- Silent mode, comprising 3 regions:
   o Region 1: During this acceleration region from zero speed, propulsion is provided purely by the IVT and so the initial motive power provided to the rail vehicle is provided purely by the IVT.
   o Region 2: The above acceleration region 1 extends up to a power threshold (power limit of the accumulator(s) providing flow to the pump(s)), at which point the transmission then switches to a mode where the accumulator energy is used in combination with engine energy until the stored energy is exhausted.
   ∘ Region 3: In this subsequent region of acceleration, the transmission uses engine energy only.

Not all of the energy supplied by the engine (prime mover 402) reaches the wheels 808. Some is used to power the auxiliaries 760 on the vehicle 750 and some is lost in the transmission. As the train is moving, pressure and suction drag act on the front and rear of the train to slow it down. Additionally, roller bearing resistance, mechanical resistance due to deflection in the track and frictional forces in the wheel-rail interface act to slow the train down. The engine (prime mover 402) must supply energy to overcome these resistive forces.

Figure 7 shows 3 graphs of a baseline DMU simulation. In the power graph, the big difference between the engine power and wheel power even during transmission lock-up is largely accounted for by the assumed steady 22.5 kW ancillary hotel load in each DMU vehicle. Ancillaries include for example the cooling fan, and the alternator amongst other systems / components.

Although the invention is envisioned primarily in respect of a diesel multiple unit (a DMU is a multiple-unit train powered by on-board prime movers), it is equally applicable to a train comprising one or more locomotives. It is even possible that the prime mover on one DMU powers a hydraulic EC machine, which is hydraulically connected to another carriage which has no prime mover of its own.

Locomotives typically have throttles that can be set at a limited number of discrete settings ("notches"). When a train has multiple locomotives, the acceleration and braking between these locomotives should be coordinated. Coordination between locomotives is clearly important so as not to overly stress couplers, and avoid tearing the coupler apart. The multiple locomotives are at least electrically connected. It is possible that the hydraulic circuits would also be connected. This electrical connection allows the engineer in the leading locomotive to set the throttles in all the locomotives simultaneously, so that when they are pulling a train they will all be operating in the same throttle notch (although there are some exceptions). Thus each locomotive is running at about the same fraction of its maximum power.

The throttle setting determines the power the locomotive is operating at, not its speed.

Although speed setting by the engineer is possible, what is coordinated and is shared between the locomotives on a single train is power setting, and only indirectly speed. The 'notch' graph in Figure 7 shows a variety of throttle notch demands, some of which lead to application of the braking and some of which lead to application of the throttle. It can be observed that the two do not occur together, as per a normal notch system, where the forward throttle position is exclusive of braking at the same time.

In respect of the variable transmission operation, the hydrostatic transmission comprises two EC pumps, each driven by a separate engine (prime mover 402), and two EC pump-motors connected to the wheels 808 of one bogie 752. As all of these are inherently variable-displacement machines, the engines (prime mover 402) can be can operated at the optimum speeds for any power level independently of the wheel-speeds in order to reduce fuel consumption to a minimum. This part of the system therefore functions as a variable transmission. In one embodiment, the controller may estimate the output power required from the engines. For this power level, it uses a look-up table to calculate the optimum engine speed.

In the embodiment illustrated in figure 13, the powertrain is driven by a pair of EC motors 800, 802, one specified to operate at low speeds, the other at high speeds. In the case of two motors, the first may be directly connected to the powertrain (e.g. via a propshaft), and the second may be also connected to the powertrain but via speed reducing gearing 806. This torque transmitting speed reducing gearing joins the high speed motor shaft and the low speed motor shaft. Thus as the vehicle speed varies, so torque is provided by the first motor 800 originally propelling the carriage 750, then the source of torque is switched so the source is switched to being provided by the second motor 802. The transition may see both motors operating simultaneously, or there may be a brief period when neither of the two motors 800, 802 is driving. The selective engagement, and disengagement of the low speed motor 800 is by a clutch 804. Thus 'clutching-out' the low speed wheel-motor 800 at high speed may potentially reduce fuel consumption, and increase tractive effort at high speed. In addition or alternatively, the high speed motor may 802 also be engaged/disengaged via a clutch, so as to 'clutch out' the high speed motor 802 at low speeds.

As is known in the art, a hydraulic hose is a resilient hydraulic coupling, typically embodied in the form of a rubber hose with wire braiding.

The control strategy within the controller optimises acceleration and braking, and may be programmed with routes and the timetable. This information is used to select an optimum level of acceleration and of braking, so as to avoid accelerating at a higher level than required (and same for braking). This system monitors the train's current position using GPS (Global Positioning System) in conjunction within the learned or programmed route and timetable.

In normal operation all locomotive wheels 808 will slip a certain controlled amount, and a certain amount of slippage is controlled by a processing device. Actual speed may be measured by an on-board radar system and compared with the speed that is measured mechanically from the wheels 808. The difference is speed of each axle 400 is carefully controlled by the system to control the amount of wheel slip.

The EC machine 702, 704 may be involved in wheel slip detection, and possibly also in the corresponding control action. In the event of wheel slip, in direct response, it is possible to rapidly reduce the displacement of the motor 702, 704 in order to reduce propulsion torque. The high bandwidth characteristics of the EC machine means the propulsion torque at the wheels 808 drops rapidly, and thus forward torque and thus slip may be eliminated more quickly than by other slower-responding conventional systems.

The gearbox 700 is mounted to the bogie 752 via three connections 550, 554, 556, and the electronically commutated motor 702, 704 is mounted at one end to the gearbox 708 via a bell housing 710, the other end of the electronically commutated motor is resiliently mounted to the bogie via a rod/tie at connection 556, or alternately the motor is mounted on a raft secured to the carriage (the raft would probably be the engine raft 754). The bell housing 902 (described as the intermediary for mounting the EC pump 904 to the engine (prime mover 402), and the bell housing 710 for mounting of the EC motor 702, 704 to the gearbox 700), are each a sort of transmission case. The case is open at both (axial) ends such that a shaft or rotating member may be allowed to protrude from each axial end. The shape of the housing 710 is a tapered doubly open-ended cylinder. As normal, its role is to transmit torque, protect the contents from ingress of contamination, and to contain fluids. As is commonly found, it is secured by bolts to adjacent components, or by other means. The raft is fixedly mounted to the carriage via resilient mounts.

An "absolute" encoder maintains position information when power is removed from the system.

Figure 14 shows approximately in cross section, the arrangement and relative position of a hydraulic pump 904 coupled to an internal combustion engine (prime mover 402), via a bell housing 902.

Some aspects of the present invention address the problem of opening a face seating valve, such as a poppet valve, against a pressure differential, to regulate the supply of fluid from a high-pressure manifold 122 to a working chamber 102 of a fluid working machine 16. This is technically difficult because, in a face seating valve, the fluid pressure acts over the seating area to create a large closing force. Accordingly, it is difficult to provide a face seating valve for regulating the supply of fluid from a high-pressure manifold 122 to a working chamber 102 of a fluid working machine 16 which is capable of opening against a significant pressure differential and which also is also capable of opening quickly (ideally within a few milliseconds) whilst minimizing energy consumption.

All mentions of motor 702, 704 in the text, are also disclosures of a motor, having zero speed starting functionality. Typically high pressure valves of the motors are capable of opening or closing against a pressure differential. This is explained in more detail below.

Opening against the above mentioned significant pressure differential is not needed at speed when the shaft 108, 110 is turning, causing the pistons to reciprocate, thus leading to variation in cylinder pressure. A time when it is needed, however, is when there is zero shaft speed - i.e. when trying to start the vehicle from zero speed. Because the main high pressure valve 120 is optimised for a particular flow and speed, it is typically not capable of opening against high pressure difference, and thus an alternate means is needed, typically carried out through a secondary valve means 121, 130. The valve assembly 1 of Figures 15 & 16 may be useful as either a low or high pressure valve, however the preferred embodiment of the invention (which provides wheel motor functionality with zero speed start) uses the assembly as a high pressure valve. The primary high pressure valve 120 will typically offer a standard cross sectional area, and the secondary high pressure valve 121 will offer a small cross sectional area meaning a lower practicable force is required to overcome the force arising from the pressure difference across that same valve. Different embodiments are possible:
- in one embodiment there is a two-stage poppet valve with an initial movement part which lifts from its seat to equalise pressure and subsequent secondary motion part which moves to perform the normal high pressure valve switching function. I.e. the initial movement part and the secondary movement part are integrated into a single valve (i.e. combining functions of 120 and 121 into a single valve, as shown in Figures 15 & 16), and may share at least part of the same actuator. According to this embodiment, the primary valve is constituted by the primary poppet head 10, which seals against seat 12, thus shutting the 'outlet of the valve' 26. The secondary high pressure valve is thus the pilot stage valve 121 (or just 'pilot valve'), and is constituted by the aperture 14 (in the primary poppet valve head 10), having a chamfered seat formed as a bevelled transition 16 against which the end of rigid stem 42 sealingly seats, thus blocking flow via fluid passage 24.
- Another embodiment of having main and pilot valve functions is a pair of valves, which connect to the same high pressure gallery 122 but which are not integrated, and may have separate actuators with high pressure valve control line 132 separate from pilot stage valve signal 130 as shown in Figure 1 (although they may still share the same actuator).

With reference to Figures 15 (A) through 16 part D, a valve assembly 1 according to the present invention has an annular valve housing 2, made from a magnetically permeable material, which encompasses a body portion 4, also made from a magnetically permeable material. A ring of high reluctance material 30 separates the valve housing from the body portion. An electromagnet 6 is formed around the body portion, within the valve housing. An annular poppet cage 8 extends from the valve housing and encompasses a primary poppet valve head 10, which functions as the primary valve member. The annular poppet cage is made from a magnetically permeable material and the primary poppet valve head is made from a ferromagnetic material, such as steel, and so functions as the ferromagnetic member. A valve seat 12 (functioning as the primary valve seat) is formed by a bevelled transition extending around the interior of the poppet cage. In a closed position, the primary poppet valve head mates with the primary valve seat to form a seal. The armature and primary poppet valve are configured so that the outward surface 62 of the armature can contact the inward surface 64 of the primary poppet valve head in order to apply force between the two parts, for example, when the valve is closed before a current is passed through the electromagnet.

The primary poppet valve head includes an aperture 14 located on the central axis of the primary poppet valve head. The aperture extends to a further bevelled transition 16, located within a valve head chamber 18, within the body of the primary poppet valve head, which also functions as a valve seat (the secondary valve seat), against which a rigid stem 42 acting as a secondary valve member is biased, to form a seal, when the valve assembly is fully closed. The aperture communicates with an interior chamber 22, within the annular poppet cage, by way of the valve head chamber, and one or more of fluid passages 24. The fluid passages have sufficient cross-sectional area to avoid significantly restricting fluid flow. Thus, when the secondary valve member in the form of rigid stem 42 is not in sealing contact with the secondary valve seat, a path is provided for fluid to flow between the outlet 26 of the valve, and the interior chamber 22. However, this path is closed off when the secondary valve member, in the form of rigid stem 42, is in sealing contact with the secondary valve seat.

The interior chamber is in fluid communication with one or more radial passages 28 which extend through the poppet cage, and function as inlets to the valve assembly. The radial passages extend into the interior chamber at a location which is intermediate the location of the periphery of the primary poppet valve head when the primary poppet valve is open, and the location of the periphery of the primary poppet valve head when the primary poppet valve head is in sealing contact with the primary poppet valve seat. Accordingly, a path is provided for fluid to flow directly from the inlets to the outlet, when the primary poppet valve is open, irrespective of whether the secondary valve is open. However, no path is provided for fluid to flow directly from the inlets to the outlet, around the periphery of the primary poppet valve head, when the primary poppet valve is closed. A magnetic circuit is formed in part by a ring of high reluctance material 30, which is located around the periphery of the body portion. The magnetic circuit also includes a flux bridge 32, which extends radially inwards from the valve housing and contacts an armature 34, which is slidable from a first position, illustrated in Figure 15(A), to a second position, illustrated in Figure 16 part B. The armature has a peripheral flange 36, which is thicker than the central portion of the armature, and which is in sliding contact with the flux bridge, and configured so as to remain in contact with (or, alternatively, remain very close to), the flux bridge whilst the armature is at any location between the first position and the second position. The flux bridge includes one or more through-bores 38, through which fluid can flow to enable the armature to move between the first and second positions. The annular valve housing, body portion and flux bridge together form a first magnetic circuit portion. A second magnetic circuit portion is formed by the annular valve housing, body portion and annular poppet cage, which is also made from a magnetically permeable material, such as steel, and in contact with the flux bridge.

The armature has a central aperture 40 therethrough. A rigid stem 42 extends through the central aperture of the armature, and the chamber within the primary poppet valve head. The rigid stem has a first end which forms the secondary valve member, and an opposite second end 44, located within a recess 46, within the valve body portion.

The valve assembly comprises three springs. The main spring 48 (functioning as the primary elastic member) extends around the rigid stem from a transition 50 within the body portion recess to an inward surface 52 of the armature and is in compression throughout operation. A charge spring 54 (functioning as the secondary elastic member) extends from the inward surface of the armature, around the rigid stem, and is located on a peripheral flange 56 at the second end of the rigid stem. The peripheral flange also has an outward surface 66 against which the inward surface of the armature can react, so that the inward surface of the armature and the outward surface of the peripheral flange thereby form a distance limiting mechanism. A pilot spring 58 (functioning as the tertiary elastic member) extends between a radially outwardly extending peripheral flange 60 located towards the first end of the rigid stem, and a radially inwardly extending flange around the interior of the chamber within the primary poppet valve head. The pilot spring is relatively relaxed when the valve assembly is in the fully closed state illustrated in Figure 15(A) but in compression when the secondary valve has opened but the primary valve has not opened, illustrated in Figure 16 part C.

The primary valve member, the secondary valve member, the rigid stem, and each of the main, charge and pilot springs are coaxial. The main spring is concentric with and extends around the charge spring.

In an example application, the valve assembly is located within a fluid working machine, with the inlet connected to a high pressure manifold, and the outlet attached to a working chamber of cyclically varying volume. The electromagnet is connected to a current source which is switchable under the control of a controller to enable current to be supplied to the electromagnet when required.

When no current is supplied to the electromagnet, the valve adopts the closed position illustrated in Figure 15(A). The main spring provides a biasing force in an outwards direction and so the armature is biased in an outwards direction, pressing the primary poppet valve head into sealing contact with the primary valve seat through the contact across outward surface 62 and inward surface 64. The charge spring is relaxed and so exerts only a small force on the rigid stem in an inwards direction (i.e. towards the top of Figure 15(A)). The pilot spring exerts an opposite and typically higher force on the rigid stem in an outwards direction. For example, the charge spring may have a preload of 10N and the pilot spring may have a preload of 15N. Thus, the net force on the rigid stem due to the preload within the charge spring and the pilot spring biases the rigid stem, and therefore the secondary valve member, outwards, into sealing contact with the secondary valve seat. The primary valve and secondary valve are also retained in the closed positions by the pressure differential between the internal chamber of the valve assembly, and the outlet. Accordingly, in the closed position illustrated in Figure 15(A), the valve assembly is closed and there is no path for fluid to flow from the high pressure valve, through the inlet, to the outlet and into the working chamber.

When current is supplied to the electromagnet, a magnetic circuit is formed, guiding flux through the armature. The electromagnet exerts an attractive force on the armature and the current through the electromagnet is selected so that the force acting on the armature is sufficient to move the armature from the first position to the second position. In a typical application, the attractive force would be insufficient to move the armature if the armature was fixedly coupled to the secondary valve member. However, according to the invention the elastic coupling allows the armature to move initially without movement of the secondary valve member. It is therefore possible to avoid unnecessary power expenditure by using a lower initial attractive force than was previously necessary. As the armature moves from the first position to the second position, the gap between the armature and the body portion decreases and the force on the armature increases.

Once the secondary valve opens, it provides a path of relatively small cross-section for fluid to flow from the internal chamber of the valve assembly, through the secondary valve seat and the central aperture in the primary poppet valve head, to the outlet. The outlet is connected to a working chamber which is effectively a closed volume, as the opening process happens so quickly that any change in working chamber volume is negligible. Accordingly, as high-pressure fluid is supplied to the working chamber through the secondary valve, the pressure at the inlet and the outlet begins to equilibrate due to an increase in pressure at the outlet. The total force required to move the rigid stem begins to drop, as the pressure differential drops. The force within the charge spring begins to drop, as the rigid stem begins to move relative to the primary poppet valve head, and the force within the pilot spring begins to increase, as the rigid stem moves relative to the primary poppet valve head, thereby reducing the length of the pilot spring. The rigid stem will settle in a position where the force from the pilot spring and the force from the charge spring are equal.

Once the secondary valve is open, the pressure differential across the primary poppet valve member drops rapidly, and the primary valve member can be readily unseated from the primary valve seat and displaced to the position illustrated in Figure 16 part D by virtue of the forces transmitted through the rigid stem and pilot spring. Fluid can therefore flow freely from the inlet to the outlet. The secondary valve will typically remain open when the valve assembly is in the open position, however, this is not essential. The primary valve will be biased open as the net force exerted by the pilot spring now exceeds the net force exerted by the charge spring, so long as the armature is held in the second position, thereby removing the force of the main spring that would otherwise act to close the primary valve. The primary valve will close again, due to the action of the main spring, and the secondary valve will close again, due to the higher preload force of the pilot spring over the charge spring, when the current flowing through the electromagnet is cut off. As the main spring acts directly on the armature which bears directly against the primary valve member, the primary poppet valve head starts to move towards the primary valve seat rapidly once the current flowing through the electromagnetic is cut off. Because it is referenced to the concomitantly-moving secondary valve, the pilot spring which opens the primary valve does not appreciably compress during closure, ensuring that the full force of the main spring is available to accelerate the closing.

In the illustrated valve arrangement, a magnetic circuit is formed comprising a first magnetic circuit portion, which extends through the flux bridge and the armature, and a second magnetic circuit portion which extends through the poppet cage and the primary poppet valve head. The first and second magnetic circuit portions are in parallel.

When the valve assembly is in the position illustrated in Figure 15 (A) and current is first supplied to the electromagnet, magnetic flux is conducted predominantly through the annular valve housing, flux bridge and armature, and across the gap between the armature and body portion. The flux density through the poppet cage and primary poppet valve head is relatively low as the reluctance of the first magnetic circuit portion is substantially lower than the reluctance of the second magnetic circuit portion.

The armature is attracted to the body portion and begins to move towards the body portion. The peripheral flange around the armature is arranged so that the flux bridge nearly contacts the armature across the entire cross-sectional area of the flux bridge not only when the armature is in the first position but through the first part of the movement of the armature. The armature moves away from the primary poppet valve head which cannot initially move and the reluctance of the second magnetic circuit portion increases still further.

Once the armature reaches the second position, after the secondary valve has started to open, the armature contacts the body portion and remains held in place against the body portion while a current continues to flow through the electromagnet. However, the peripheral flange is arranged so that, in the second position, the overlap between the peripheral flange and the flux bridge is significantly less than the entire cross-sectional area of the flux bridge. This increases the reluctance of the junction between the flux bridge and the armature.

After a short period of time, the secondary valve member contacts the armature which itself remains in contact with the body portion. While current continues to be supplied through the electromagnet, a magnetic circuit is completed through the electromagnet, the poppet cage, the primary poppet valve head and the armature. Thus, in the open position, the primary poppet valve head is magnetically attracted to the armature, and is subject to a force, which resists Bernoulli forces which act on the primary poppet valve head, caused by the rapid flow of fluid, from the inlet, past the periphery of the primary poppet valve head to the outlet and then to a working chamber, down a pressure gradient. Thus, the primary poppet valve head is held open by virtue of the magnetic circuit.

This mechanism is facilitated by the increased reluctance of the junction between the flux bridge and the armature, which directs flux through the poppet valve cage and the primary poppet valve head (functioning as the second magnetic circuit portion). Even though the overall reluctance of the path through the flux bridge and armature to the body portion may be lower when the armature is in the second position than the first position because the armature is in direct contact with the body portion, the ratio of the reluctance of the path through the flux bridge and armature to the body portion to the reluctance of the path through the primary valve poppet head is higher when the armature is in the second position and the primary valve poppet head is held open. Thus, a higher proportion of magnetic flux is directed through the primary valve poppet head than would otherwise be the case, increasing the available holding force.

Once the current to the electromagnet is switched off, the magnetic field decays and the primary poppet valve head moves in an outwards direction to sealingly contact the primary valve seat.

Further modifications and variations may be made within the scope of the invention herein disclosed. For example, although in the embodiments described above the transmission of the invention is provided on a rail vehicle, the transmission can alternatively be used on other types of vehicle such as buses.

### Reference numerals

1 - Valve assembly
2 - Annular valve housing
4 - Body portion
6 - Electromagnet
8 - Annular poppet cage
10 - Primary poppet valve head
12 - Valve seat
14 -Aperture
16 - Further bevelled transition
18 - Valve head chamber
22 - Interior chamber
24 - Fluid passages
26 - Outlet of the valve
28 - More radial passages
30 - Ring of high reluctance material
32 - Flux bridge
34 - Armature
36 - Peripheral flange
38 - Through bores
40 - Central aperture
42 - Rigid stem
44 - Second end
46 - Recess
48 - Main spring
50 - Transition
52 - Inward surface
54 - Charge spring
56 - Peripheral flange
58 - Pilot spring
60 - External peripheral flange
62 - Outward surface
64 - Inward surface
66 - Outward surface
100/ 163 - Cylinder
102 - Working chamber
106 - Piston
108 - Centre part of eccentric shaft
110 - Eccentric cam part of eccentric shaft
112 - Encoder
116 - Valve controller
118 - Low pressure valve
120 - High pressure valve
121 - Pilot stage valve
122 - High pressure gallery
123 - Low pressure gallery
124 - Low pressure valve control line
128 - Pressure relief valve
130 - Pilot stage valve signal
132 / 216 - High pressure valve control line
140 - Pressurised fluid hydraulic fluid line
142 - The electronically commutated machine
144 - Flow into the hydraulic machine
146 - Flow out of the hydraulic machine
148 - Displacement demand signal
150 - Processor
152 - Bus
154 - Memory
156 - Input-output port (also: 'hydraulic transmission controller')
158 - Program
159 - Program code
162 - Database
164 - Deactivated cylinder
165 - Number of times each cylinder has undergone active cycle
166 - Shaft position signal
168 - Pressure signal
170 - Input signal
199 - Variables
200 - Signals (input signals (166, 168, 170)
202 - Target torque
204 - Lookup table
206 - Displacement of the hydraulic pump
300 - Beginning of procedure
302 - Set stored variable algorithmic accumulator to zero
304 - Decision point for an individual cylinder (step when the decision point is reached for the next cylinder)
306 - Motor controller reads the meter displacement
308 - A variable algorithmic sum
310 - Cylinder status check
312 - Comparison of algorithmic sum
314 - Active cycle
316 - Inactive cycle
318 - Calculated accumulator value
400 - Axle
402 - Prime mover
404 - Hydraulic accumulator
406 - Circuit division line
450 - Time when accumulator charging event starts during vehicle braking
452 - Time when accumulator charging event stops
550 - First gearbox mount
554 - Second gearbox mount
556 - Third gearbox mount
600 - Resilient mount between bogie and carriage
700 - Gearbox
702 - First hydraulic pump-motor
704 - Second hydraulic pump-motor
706 - High pressure manifold
708 - Low pressure manifold
710 - Bell housing for the motor
712 - Quill shaft
714 - Resilient member
716 - Connection piece (spans the resilient member 714 to the axle 400)
718 - Further resilient member (mounted to the quill shaft 712)
720 - Further connection piece (spans the axle-mounted gear to the further resilient member 718)
722 - Brakes
750 - Vehicle or carriage
752 - Hydraulic motor bogie
754 - Engine raft
756 - Accumulators including backup bottles
758 - Oil tank
760 - Auxiliaries
762 - Batteries
764 - Fuel tank
766 - Trailer bogie
800 - Low speed motor
802 - High speed motor
804 - Clutch
806 - Gears
808 - Wheels
810 - Final drive
812 - Drive shaft
902 - Bell housing
904 - Hydraulic pump

## Claims

1. A series hydrostatic transmission for a vehicle, the vehicle comprising a plurality of wheels (808), the transmission comprising: first hydraulic pump (904) and a hydraulic motor (702, 704) each of which has a pumping mode in which it operates as a hydraulic pump and a motoring mode in which it operates as a hydraulic motor, the pump being torque connected or torque connectable to at least one prime mover (402), the motor (702, 704) being torque connected or torque connectable to one or more of the wheels (808) by way of a torque transmitting device, wherein the transmission has at least a first mode in which the pump (904) and motor (702, 704) are fluidly connected to each other such that fluid pressurised by the pump drives the motor, a second mode in which energy from hydraulic fluid pressurised by the motor in the pumping mode is transferred to an energy store (404), and a third mode in which energy from the energy store (404) drives the motor (702, 704),
**characterised by** the said pump (904) and the said motor (702, 704) each comprising a plurality of cylinders (100) of cyclically varying working volume (102) in which the displacement of hydraulic fluid through each cylinder (100) is regulated by one or more electronically controllable valves (118), on each cycle of cylinder working volume, and in phased relationship to cycles of cylinder working volume with reference to a phase signal provided by a phase sensor, and
wherein the motor comprises a valve assembly (120) disposed between a high pressure line (122) and a working chamber (102) of the motor, the valve assembly comprising: a main valve having a main valve element providing sealing contact with a valve seat (12); and a pilot valve (121) for equalising pressure across the main valve element by placing the working chamber in direct fluid communication with the high pressure line (122).

2. A-The transmission according to claim 1, where the energy store comprises a hydraulic accumulator (404), and in the said second mode energy is transferred by way of hydraulic fluid pressurised by the motor (702, 704) in the pumping mode, and in the third said mode the energy driving motoring of the motor (702, 704) is provided by pressurised hydraulic fluid released from the accumulator (404).

3. The transmission according to claim 1, where the energy store comprises a rotatable flywheel, and in the said second mode energy is transferred by way of kinetic energy supplied to the flywheel by a flywheel hydraulic pump-motor having a pumping mode in which it operates as a pump and a motoring mode in which it operates as a motor, the said flywheel hydraulic pump motor operating in the motoring mode and being driven by hydraulic fluid pressurised by said motor in the pumping mode, and the energy driving motoring of the said motor in the said third mode being provided by fluid pressurised by the flywheel hydraulic pump-motor operating in the pumping mode, the flywheel hydraulic pump-motor being driven by rotation of the flywheel.

4. The A-transmission according to any previous claim, wherein the vehicle comprises a carriage (750) having a bogie (752) comprising the said wheels (808) and at least one raft (754) secured to the carriage (750), wherein the said prime mover (402) is fixedly mounted to the said raft (754), and wherein the motor is mounted to the bogie (752), or on a shaft secured to the carriage (750), and where the torque transmitting device is a geared device, comprising at least two gears.

5. The A-transmission according to any previous claim, wherein the first pump (904) is fixedly connected or fixedly connectable to the prime-mover (402) by way of a bell housing (710) and flexible coupling, wherein a torque between the bell housing and the first pump is internally resolved within the bell housing (710) and the pump housing, meaning that drive torque between the pump and the bell housing is not transmitted to the pump mounts.

6. The transmission according to any previous claim, wherein the vehicle comprises a carriage (750) having a bogie (752) comprising the said wheels (808) and at least one raft (754) secured to the carriage (750), and wherein there is a primary suspension located to suspend the bogie (752) from the axle and thus the wheels, and wherein there is a quill shaft (712) which transmits torque from the torque transmission device to the axle, and wherein a flexible element couples the axle and the torque transmitting device thus allowing the axle to travel the full length of the primary suspension without the axle impacting the inner diameter of the quill shaft.

7. The transmission according to any previous claim comprising a fourth mode in which the first pump (904) and said motor (702, 704) are fluidly connected to each other such that fluid pressurised by the first pump drives the said motor and in which energy from the energy store drives the said motor, wherein the said energy from the energy store is provided by way of pressurised hydraulic fluid which is combined with the said pressurised hydraulic fluid provided by the first pump.

8. The A-transmission according to any previous claim comprising a fifth mode in which energy from the energy store (404) drives the first pump (904), pressurised fluid from the said energy store driving motoring of the first pump.

9. The A-transmission according to any previous claim comprising a sixth mode in which fluid pressurised by the first pump (404) is transferred to the energy store (904).

10. The A-transmission according to any previous claim comprising one or more switchable hydraulic valves switchable between open and closed positions by a controller (116), wherein the controller is configured to switch one or more of the said switchable valves between open and closed positions to thereby inhibit locking of one or more said wheels of the vehicle during braking event and/or to inhibit excess rotation of one or more said wheels of the vehicle during an acceleration event.

11. The A-transmission according to any previous claim, where one or more accessories and/or ancillaries and/or auxiliaries are driven by a hydraulic motor which is provided with pressurised fluid from the transmission.

12. The A-transmission according to any previous claim wherein the said plurality of wheels (808) of the vehicle comprises a first pair of wheels mechanically coupled together by a first axle and a second pair of wheels mechanically coupled together by a second axle, wherein the said motor is a first motor and is torque connected or torque connectable to the said first plurality of wheels by way of the first axle, wherein the transmission further comprises a second motor having a pumping mode and a motoring mode, the said second motor being torque connected or torque connectable to the second plurality of wheels by way of the second axle, and wherein, in the said first mode, the said first pump or a further pump operating in the pumping mode is fluidly connected to the second motor such that fluid pressurised by the first pump or by the said further pump drives the said second motor, the torque applied by the said first motor to the first axle and by the second motor to the second axle being independently variable.

13. A method of operating the transmission according to any one of claims 1 to 12, comprising providing propulsion to the vehicle by operating the transmission in the said third mode; and, responsive to a determination that an energy supply in the energy store (404) is or will be exhausted, operating the transmission in the said first mode.

14. A method of operating the transmission according to any one of claims 1 to 12 comprising providing propulsion to the vehicle by operating the transmission in the said third mode, with the respective prime mover(s) (402) shut off, until one or more predefined criteria are met, and once the criteria are met powering the prime mover.

15. A method of operating the transmission according to any one of claims 1 to 11 comprising operating the said motor to drive the said wheels (808) clockwise in a first motoring mode and anticlockwise in a second motoring mode, or a method according to claim 13 comprising operating the first motor to drive the said first pair of wheels clockwise in a first motoring mode and anticlockwise in a second motoring mode and/or operating the second motor to drive the said second pair of wheels clockwise in a first motoring mode and anticlockwise in a second motoring mode.

## Patentansprüche

1. Serielles hydrostatisches Getriebe für ein Fahrzeug, wobei das Fahrzeug mehrere Räder (808) umfasst, wobei das Getriebe Folgendes umfasst: eine erste hydraulische Pumpe (904) und einen hydraulischen Motor (702, 704), die jeweils einen Pumpmodus, in dem sie als eine hydraulische Pumpe arbeiten, und einen Motormodus, in dem sie als ein hydraulischer Motor arbeiten, aufweisen, wobei die Pumpe mit zumindest einer Antriebsmaschine (402) drehmomentverbunden oder drehmomentverbindbar ist, wobei der Motor (702, 704) mittels einer Drehmomentübertragungsvorrichtung mit einem oder mehreren der Räder (808) drehmomentverbunden oder drehmomentverbindbar ist, wobei das Getriebe zumindest einen ersten Modus, in dem die Pumpe (904) und der Motor (702, 704) fluidisch miteinander verbunden sind, sodass durch die Pumpe druckbeaufschlagtes Fluid den Motor antreibt, einen zweiten Modus, in dem Energie von dem durch den Motor im Pumpenmodus druckbeaufschlagtes Hydraulikfluid zu einem Energiespeicher (404) übertragen wird, und einen dritten Modus, in dem Energie vom Energiespeicher (404) den Motor (702, 704) antreibt, aufweist,
**dadurch gekennzeichnet, dass** die Pumpe (904) und der Motor (702, 704) jeweils mehrere Zylinder (100) mit zyklisch variierendem Arbeitsvolumen (102) umfassen, in denen die Verdrängung von Hydraulikfluid durch jeden Zylinder (100) durch ein oder mehrere elektronisch steuerbare Ventile (118) geregelt wird, bei jedem Zyklus des Zylinderarbeitsvolumens und in Phasenbeziehung mit Zyklen des Zylinderarbeitsvolumens bezüglich eines durch einen Phasensensor bereitgestellten Phasensignals, und wobei der Motor eine Ventilanordnung (120) umfasst, die zwischen einer Hochdruckleitung (122) und einer Arbeitskammer (102) des Motors angeordnet ist, wobei die Ventilanordnung Folgendes umfasst: ein Hauptventil mit einem Hauptventilelement, das abdichtenden Kontakt mit einem Ventilsitz (12) bereitstellt; und ein Pilotventil (121) zum Ausgleichen von Druck über das Hauptventilelement durch Platzieren der Arbeitskammer in direkte Fluidverbindung mit der Hochdruckleitung (122).

2. Getriebe nach Anspruch 1, wobei der Energiespeicher einen hydraulischen Akkumulator (404) umfasst und wobei in dem zweiten Modus Energie mittels eines durch den Motor (702, 704) im Pumpmodus druckbeaufschlagten Hydraulikfluids übertragen wird, und wobei im dritten Modus die Energie, die das Arbeiten des Motors (702, 704) antreibt, durch druckbeaufschlagtes Hydraulikfluid bereitgestellt wird, das aus dem Akkumulator (404) freigesetzt wird.

3. Getriebe nach Anspruch 1, wobei der Energiespeicher ein drehbares Schwungrad umfasst, und wobei im zweiten Modus Energie mittels kinetischer Energie übertragen wird, die dem Schwungrad durch einen hydraulischen Pumpe-Motor des Schwungrads geliefert wird, der einen Pumpmodus, in dem er als eine Pumpe arbeitet, und einen Motormodus, in dem er als Motor arbeitet, aufweist, wobei der hydraulische Pumpe-Motor des Schwungrads im Motormodus arbeitet und durch ein durch den Motor druckbeaufschlagtes Hydraulikfluid angetrieben wird, und wobei die Energie, die das Arbeiten des Motors im dritten Modus antreibt, durch ein durch den im Pumpenmodus arbeitenden hydraulischen Pumpe-Motor druckbeaufschlagtes Fluid bereitgestellt wird, wobei der hydraulische Pumpe-Motor des Schwungrads durch Rotation des Schwungrads angetrieben wird.

4. Getriebe nach einem der vorhergehenden Ansprüche, wobei das Fahrzeug einen Schlitten (750) mit einem Drehgestell (752) umfasst, umfassend die Räder (808) und zumindest ein an dem Schlitten (750) gesichertes Fundament (754), wobei die Antriebsmaschine (402) fest an dem Fundament (754) montiert ist, und wobei der Motor an dem Drehgestell (752) oder an einer am Schlitten (750) gesicherten Welle montiert ist, und wobei die Drehmomentübertragungsvorrichtung eine gezahnte Vorrichtung ist, die mindestens zwei Zahnräder umfasst.

5. Getriebe nach einem der vorhergehenden Ansprüche, wobei die erste Pumpe (904) über eine Kupplungsglocke (710) und eine flexible Kupplung mit der Antriebsmaschine (402) fest verbunden oder fest verbindbar ist, wobei ein Drehmoment zwischen der Kupplungsglocke und der ersten Pumpe innerhalb der Kupplungsglocke (710) und des Pumpengehäuses intern aufgelöst wird, was bedeutet, dass das Antriebsdrehmoment zwischen der Pumpe und der Kupplungsglocke nicht auf die Pumpenbefestigungen übertragen wird.

6. Getriebe nach einem der vorhergehenden Ansprüche, wobei das Fahrzeug einen Schlitten (750) mit einem Drehgestell (752) umfasst, umfassend die Räder (808) und zumindest ein an dem Schlitten (750) gesichertes Fundament (754), und wobei die primäre Federung positioniert ist, um das Drehgestell (752) bezüglich der Achse und damit der Räder zu federn, und wobei es eine Hohlwelle (712) gibt, die Drehmoment von der Drehmomentübertragungsvorrichtung auf die Achse überträgt, und wobei ein flexibles Element die Achse und die Drehmomentübertragungsvorrichtung koppelt, so der Achse ermöglichend, sich über die volle Länge der primären Federung zu bewegen, ohne dass die Achse auf den Innendurchmesser der Hohlwelle auftrifft.

7. Getriebe nach einem der vorherigen Ansprüche, umfassend einen vierten Modus, in dem die erste Pumpe (904) und der Motor (702, 704) fluidisch miteinander verbunden sind, sodass durch die erste Pumpe druckbeaufschlagtes Fluid den Motor antreibt, und in dem Energie aus dem Energiespeicher den Motor antreibt, wobei die Energie aus dem Energiespeicher bereitgestellt wird mittels druckbeaufschlagten Hydraulikfluids, das mit dem durch die erste Pumpe bereitgestellten druckbeaufschlagten Hydraulikfluid kombiniert wird.

8. Getriebe nach einem der vorhergehenden Ansprüche, umfassend einen fünften Modus, in dem Energie aus dem Energiespeicher (404) die erste Pumpe (904) antreibt, wobei druckbeaufschlagtes Fluid aus dem Energiespeicher Arbeiten der ersten Pumpe antreibt.

9. Getriebe nach einem der vorhergehenden Ansprüche, umfassend einen sechsten Modus, in dem durch die erste Pumpe (404) druckbeaufschlagtes Fluid zum Energiespeicher (904) übertragen wird.

10. Getriebe nach einem der vorhergehenden Ansprüche, umfassend ein oder mehrere umschaltbare hydraulische Ventile, durch eine Steuerung (116) umschaltbar zwischen offenen und geschlossenen Positionen, wobei die Steuerung ausgelegt ist zum Umschalten von einem oder mehreren der umschaltbaren Ventile zwischen offenen und geschlossenen Positionen, um so Verriegeln von einem oder mehreren der Räder des Fahrzeugs während eines Bremsereignisses zu unterbinden und/oder um übermäßige Rotation von einem oder mehreren der Räder des Fahrzeugs während eines Beschleunigungsereignisses zu unterbinden.

11. Getriebe nach einem der vorhergehenden Ansprüche, wobei ein oder mehrere Zubehörteile und/oder Zusatzvorrichtungen und/oder Hilfsvorrichtungen durch einen hydraulischen Motor angetrieben werden, der mit druckbeaufschlagtem Fluid aus dem Getriebe versorgt wird.

12. Getriebe nach einem der vorhergehenden Ansprüche, wobei die mehreren Räder (808) des Fahrzeugs ein erstes Paar Räder, die durch eine erste Achse mechanisch miteinander gekoppelt sind, und ein zweites Paar Räder, die durch eine zweite Achse mechanisch miteinander gekoppelt sind, umfassen, wobei der Motor ein erster Motor ist und mittels der ersten Achse mit den ersten mehreren Rädern drehmomentverbunden oder drehmomentverbindbar ist, wobei das Getriebe ferner einen zweiten Motor umfasst, der einen Pumpmodus und einen Motormodus aufweist, wobei der zweite Motor mittels der zweiten Achse mit den zweiten mehreren Rädern drehmomentverbunden oder drehmomentverbindbar ist, und wobei, im ersten Modus, die erste Pumpe oder eine weitere Pumpe, die im Pumpmodus arbeitet, fluidisch mit dem zweiten Motor verbunden ist, sodass durch die erste Pumpe oder durch die weitere Pumpe druckbeaufschlagtes Fluid den zweiten Motor antreibt, wobei das durch den ersten Motor auf die erste Achse und das durch den zweiten Motor auf die zweite Achse angewendete Drehmoment unabhängig variierbar sind.

13. Verfahren zum Betreiben des Getriebes nach einem der Ansprüche 1 bis 12, umfassend Bereitstellen von Antrieb für das Fahrzeug durch Betreiben des Getriebes im dritten Modus; und, in Reaktion auf eine Bestimmung, dass eine Energieversorgung im Energiespeicher (404) erschöpft ist oder sein wird, Betreiben des Getriebes in dem ersten Modus.

14. Verfahren zum Betreiben des Getriebes nach einem der Ansprüche 1 bis 12, umfassend Bereitstellen von Antrieb für das Fahrzeug durch Betreiben des Getriebes in dem dritten Modus, wobei die entsprechende(n) Antriebsmaschine(n) (402) ausgeschaltet sind, bis ein oder mehrere vordefinierte Kriterien erfüllt sind, und sobald die Kriterien erfüllt sind, Einschalten der Antriebsmaschine.

15. Verfahren zum Betreiben des Getriebes nach einem der Ansprüche 1 bis 11, umfassend Betreiben des Motors zum Antreiben der Räder (808) im Uhrzeigersinn in einem ersten Motormodus und gegen den Uhrzeigersinn in einem zweiten Motormodus, oder Verfahren nach Anspruch 13, umfassend Betreiben des ersten Motors zum Antreiben des ersten Paares Räder im Uhrzeigersinn in einem ersten Motormodus und gegen den Uhrzeigersinn in einem zweiten Motormodus und/oder Betreiben des zweiten Motors zum Antreiben des zweiten Paares Räder im Uhrzeigersinn in einem ersten Motormodus und gegen den Uhrzeigersinn in einem zweiten Motormodus.

## Revendications

1. Transmission hydrostatique série pour un véhicule, le véhicule comprenant une pluralité de roues (808), la transmission comprenant : une première pompe hydraulique (904) et un moteur hydraulique (702, 704), dont chacun a un mode de pompage dans lequel il fonctionne en tant que pompe hydraulique et un mode d'entraînement moteur dans lequel il fonctionne en tant que moteur hydraulique, la pompe étant raccordée avec couple ou raccordable avec couple à au moins une unité motrice principale (402), le moteur (702, 704) étant raccordé avec couple ou raccordable avec couple à une ou plusieurs des roues (808) par le biais d'un dispositif de transmission de couple, dans laquelle la transmission a au moins un premier mode, dans lequel la pompe (904) et le moteur (702, 704) sont fluidiquement raccordés l'un à l'autre de telle sorte qu'un fluide mis sous pression par la pompe entraîne le moteur, un deuxième mode, dans lequel de l'énergie provenant d'un fluide hydraulique mis sous pression par le moteur dans le mode de pompage est transférée à un stockage d'énergie (404), et un troisième mode, dans lequel de l'énergie provenant du stockage d'énergie (404) entraîne le moteur (702, 704),
**caractérisé en ce que** ladite pompe (904) et ledit moteur (702, 704) comprennent chacun une pluralité de cylindres (100) de volume utile variant cycliquement (102), dans lesquels la cylindrée d'un fluide hydraulique à travers chaque cylindre (100) est régulée par une ou plusieurs soupapes à commande électronique (118), à chaque cycle de volume utile de cylindre, et en relation phasée avec des cycles de volume utile de cylindre en référence à un signal de phase fourni par un capteur de phase, et
dans laquelle le moteur comprend un ensemble de soupapes (120) disposé entre une conduite à haute pression (122) et une chambre utile (102) du moteur, l'ensemble de soupapes comprenant : une soupape principale ayant un élément de soupape principale fournissant un contact d'étanchéité avec un siège de soupape (12) ; et une soupape pilote (121) pour égaliser une pression dans l'élément de soupape principale en plaçant la chambre utile en communication fluidique directe avec la conduite à haute pression (122).

2. Transmission selon la revendication 1, où le stockage d'énergie comprend un accumulateur hydraulique (404), et, dans ledit deuxième mode, de l'énergie est transférée par le biais d'un fluide hydraulique mis sous pression par le moteur (702, 704) dans le mode de pompage, et, dans le troisième dit mode, l'énergie entraînant l'entraînement moteur du moteur (702, 704) est fournie par un fluide hydraulique mis sous pression libéré de l'accumulateur (404).

3. Transmission selon la revendication 1, où le stockage d'énergie comprend un volant d'inertie rotatif, et, dans ledit deuxième mode, de l'énergie est transférée par le biais d'énergie cinétique dont l'alimentation au volant d'inertie est effectuée par un moteur-pompe hydraulique à volant d'inertie ayant un mode de pompage, dans lequel il fonctionne en tant que pompe, et un mode d'entraînement moteur, dans lequel il fonctionne en tant que moteur, ledit moteur-pompe hydraulique à volant d'inertie fonctionnant dans le mode d'entraînement moteur et étant entraîné par un fluide hydraulique mis sous pression par ledit moteur dans le mode de pompage, et l'énergie entraînant l'entraînement moteur dudit moteur, dans ledit troisième mode, étant fournie par un fluide mis sous pression par le moteur-pompe hydraulique à volant d'inertie fonctionnant dans le mode de pompage, le moteur-pompe hydraulique à volant d'inertie étant entraîné par la rotation du volant d'inertie.

4. Transmission selon une quelconque revendication précédente, dans laquelle le véhicule comprend une voiture (750) ayant un bogie (752) comprenant lesdites roues (808) et au moins un châssis (754) arrimé à la voiture (750), dans laquelle ladite unité motrice principale (402) est montée de façon fixe sur ledit châssis (754), et dans laquelle le moteur est monté sur le bogie (752), ou sur un arbre arrimé à la voiture (750), et où le dispositif de transmission de couple est un dispositif à engrenage, comprenant au moins deux pièces d'engrenage.

5. Transmission selon une quelconque revendication précédente, dans laquelle la première pompe (904) est raccordée de façon fixe ou raccordable de façon fixe à l'unité motrice principale (402) par le biais d'un carter d'embrayage (710) et d'un couplage flexible, dans laquelle un couple entre le carter d'embrayage et la première pompe est transformé de façon interne à l'intérieur du carter d'embrayage (710) et du carter de pompe, ce qui signifie qu'un couple d'entraînement entre la pompe et le carter d'embrayage n'est pas transmis aux supports de pompe.

6. Transmission selon une quelconque revendication précédente, dans laquelle le véhicule comprend une voiture (750) ayant un bogie (752) comprenant lesdites roues (808) et au moins un châssis (754) arrimé à la voiture (750), et dans laquelle il y a une suspension primaire située pour suspendre le bogie (752) à partir de l'essieu et ainsi des roues, et dans laquelle il y a un arbre de torsion creux (712) qui transmet un couple depuis le dispositif de transmission de couple à l'essieu, et dans laquelle un élément flexible accouple l'essieu et le dispositif de transmission de couple, ainsi permettant à l'essieu de se déplacer sur la longueur complète de la suspension primaire sans que l'essieu ait un impact sur le diamètre intérieur de l'arbre de torsion creux.

7. Transmission selon une quelconque revendication précédente, comprenant un quatrième mode, dans lequel la première pompe (904) et ledit moteur (702, 704) sont fluidiquement raccordés l'un à l'autre de telle sorte qu'un fluide mis sous pression par la première pompe entraîne ledit moteur et dans lequel de l'énergie provenant du stockage d'énergie entraîne ledit moteur, dans laquelle ladite énergie provenant du stockage d'énergie est fournie par le biais d'un fluide hydraulique mis sous pression qui est associé audit fluide hydraulique mis sous pression fourni par la première pompe.

8. Transmission selon une quelconque revendication précédente, comprenant un cinquième mode, dans lequel de l'énergie provenant du stockage d'énergie (404) entraîne la première pompe (904), un fluide mis sous pression provenant dudit stockage d'énergie entraînant l'entraînement moteur de la première pompe.

9. Transmission selon une quelconque revendication précédente, comprenant un sixième mode, dans lequel un fluide mis sous pression par la première pompe (404) est transféré au stockage d'énergie (904).

10. Transmission selon une quelconque revendication précédente, comprenant une ou plusieurs soupapes hydrauliques permutables, permutables entre des positions ouverte et fermée par une unité de commande (116), dans laquelle l'unité de commande est configurée pour permuter une ou plusieurs desdites soupapes permutables entre des positions ouverte et fermée pour ainsi empêcher le blocage d'une ou de plusieurs dites roues du véhicule durant un événement de freinage et/ou pour empêcher la rotation excessive d'une ou de plusieurs dites roues du véhicule durant un événement d'accélération.

11. Transmission selon une quelconque revendication précédente, où une ou plusieurs pièces accessoires et/ou pièces secondaires et/ou pièces auxiliaires sont entraînées par un moteur hydraulique qui est alimenté en un fluide mis sous pression provenant de la transmission.

12. Transmission selon une quelconque revendication précédente, dans laquelle ladite pluralité de roues (808) du véhicule comprend une première paire de roues mécaniquement couplées ensemble par un premier essieu et une seconde paire de roues mécaniquement couplées ensemble par un second essieu, dans laquelle ledit moteur est un premier moteur et est raccordé avec couple ou raccordable avec couple à ladite première pluralité de roues par le biais du premier essieu, dans laquelle la transmission comprend en outre un second moteur ayant un mode de pompage et un mode d'entraînement moteur, ledit second moteur étant raccordé avec couple ou raccordable avec couple à la seconde pluralité de roues par le biais du second essieu, et dans laquelle, dans ledit premier mode, ladite première pompe ou une pompe supplémentaire fonctionnant dans le mode de pompage est fluidiquement raccordée au second moteur de telle sorte qu'un fluide mis sous pression par la première pompe ou par ladite pompe supplémentaire entraîne ledit second moteur, le couple appliqué par ledit premier moteur sur le premier essieu et par le second moteur sur le second essieu étant indépendamment variable.

13. Procédé de fonctionnement de la transmission selon l'une quelconque des revendications 1 à 12, comprenant la fourniture de propulsion au véhicule par l'intermédiaire de la mise en fonctionnement de la transmission dans ledit troisième mode ; et, en réponse à une détermination qu'une alimentation en énergie dans le stockage d'énergie (404) est ou sera épuisée, par l'intermédiaire de la mise en fonctionnement de la transmission dans ledit premier mode.

14. Procédé de fonctionnement de la transmission selon l'une quelconque des revendications 1 à 12, comprenant la fourniture de propulsion au véhicule par l'intermédiaire de la mise en fonctionnement de la transmission dans ledit troisième mode, avec la (les) unité(s) motrice(s) principale(s) respective(s) (402) éteinte(s), jusqu'à ce qu'un ou plusieurs critères prédéfinis soient respectés, et, une fois que les critères sont respectés, l'alimentation de l'unité motrice principale.

15. Procédé de fonctionnement de la transmission selon l'une quelconque des revendications 1 à 11, comprenant la mise en fonctionnement dudit moteur pour entraîner lesdites roues (808) dans le sens des aiguilles d'une montre, dans un premier mode d'entraînement moteur, et dans le sens inverse des aiguilles d'une montre, dans un second mode d'entraînement moteur, ou procédé selon la revendication 13 comprenant la mise en fonctionnement du premier moteur pour entraîner ladite première paire de roues dans le sens des aiguilles d'une montre, dans un premier mode d'entraînement moteur, et dans le sens inverse des aiguilles d'une montre, dans un second mode d'entraînement moteur, et/ou la mise en fonctionnement du second moteur pour entraîner ladite seconde paire de roues dans le sens des aiguilles d'une montre, dans un premier mode d'entraînement moteur, et dans le sens inverse des aiguilles d'une montre, dans un second mode d'entraînement moteur.
